(19) Europäisches Patentamt European Patent Office Office européen des brevets

(11) **EP 4 550 019 A2**

(12) **EUROPEAN PATENT APPLICATION**

(43) Date of publication:
07.05.2025 Bulletin 2025/19

(21) Application number: 25164265.8

(22) Date of filing: 17.03.2025

(51) International Patent Classification (IPC):
*G02B 9/58* (2006.01)     *G02B 13/04* (2006.01)
*G02B 13/00* (2006.01)     *G02B 13/18* (2006.01)

(52) Cooperative Patent Classification (CPC):
G02B 9/58; G02B 13/004; G02B 13/04;
G02B 13/18

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.09.2024 CN 202411281039

(71) Applicant: **Jiangxi OFILM Optical Co. Ltd.**
**Nanchang, Jiangxi 330096 (CN)**

(72) Inventor: **Takashi, Sugiyama**
**Nanchang, 330096 (CN)**

(74) Representative: **Metida**
**Gyneju str. 16**
**01109 Vilnius (LT)**

(54) **OPTICAL LENS, CAMERA MODULE, AND TERMINAL DEVICE**

(57)     An optical lens, a camera module, and a terminal device are provided. The optical lens includes a first lens, a second lens, a third lens, and a fourth lens. The first lens has negative refractive power, the second lens has positive refractive power, the third lens has positive refractive power, and the fourth lens has negative refractive power, the optical lens satisfies following relationships: 65°<FOV<75°, 1.2<ImgH/F<1.4. FOV is a maximum field of view of the optical lens, ImgH is a diameter of a largest effective imaging circle on an imaging plane of the optical lens, and F is an effective focal length of the optical lens. The optical lens, the camera module, and the terminal device of the present application can achieve excellent imaging quality while meeting the requirements of miniaturization design.

**Fig. 1**

**Description**

TECHNICAL FIELD

The subject matter relates to field of optical imaging, and more particularly, to an optical lens, a camera module, and a terminal device.

BACKGROUND

In recent years, with the improvement of people's requirements for driving experience, the use of vehicle-mounted optical lenses on intelligent driving is increasing, for example, a surveillance lens is usually installed inside the vehicle.

The surveillance lens inside the vehicle is generally required to have a large field of view, large aperture, day and night co-focusing, miniaturization and other characteristics due to its special use environment, in order to achieve high-definition imaging of the image inside the vehicle and the image outside the vehicle. The existing surveillance lenses inside the vehicle have a small field of view and are unable to provide high-definition imaging throughout the day, it is difficult to meet the monitoring needs inside the vehicle.

SUMMARY

The present application provides an optical lens, a camera module, and a terminal device, and the optical lens of the present application can have a large field of view, achieve excellent imaging quality, and meet the requirements of miniaturization design.

In a first aspect, the present application provides an optical lens. The optical lens includes four lenses with refractive power, from an object side to an image side along an optical axis, the four lenses sequentially include a first lens, a second lens, a third lens, and a fourth lens. The first lens has negative refractive power, an object side surface of the first lens is concave near the optical axis, and an image side surface of the first lens is convex near the optical axis. The second lens has positive refractive power, an object side surface of the second lens is convex near the optical axis, and an image side surface of the second lens is concave near the optical axis. The third lens has positive refractive power, an object side surface of the third lens is concave near the optical axis, and an image side surface of the third lens is convex near the optical axis. The fourth lens has negative refractive power, an object side surface of the fourth lens is convex near the optical axis, and an image side surface of the fourth lens is concave near the optical axis, the optical lens satisfies following relationships: $65°<FOV<75°$, $1.2<ImgH/F<1.4$; FOV is a maximum field of view of the optical lens, ImgH is a diameter of a largest effective imaging circle on an imaging plane of the optical lens, and F is an effective focal length of the optical lens.

When the incident light rays pass through the first lens with negative refractive force, the light rays with a larger field of view may be effectively coupled into the optical lens, the object side surface of the first lens is concave near the optical axis and the image side surface of the first lens is convex near the optical axis, the field of view of optical lenses may be increased, and the total optical length of the optical lenses may be shortened. The second lens has a positive refractive force, the object side surface of the second lens is convex near the optical axis, and the image side surface of the second lens is concave near the optical axis, the incident angle of the light rays on the object side surface of the second lens and on the image side surface of the second lens may be reduced, the reflection of the light rays on the surfaces of the lenses may be reduced, and the aberration may be corrected. The third lens has positive refractive power, the object side surface of the third lens is concave near the optical axis, and the image side surface of the third lens is convex near the optical axis, the refractive force of the optical lens may be distributed appropriately, the amplitude of the overall refractive force of the optical lens moving towards the object side direction is reduced, and the total optical length of the optical lens is shortened, thus meeting the requirements of miniaturization design. By combining the fourth lens with negative refractive power, the field curvature and astigmatism of the optical lens may be effectively corrected, and the optical lens may be matched with the image sensor with larger main light angles, thereby improving the imaging quality. The object side surface of the fourth lens is convex near the optical axis, the image side surface of the fourth lens is concave near the optical axis, and the total optical length of the optical lens may be further shortened, thereby making the structure of the four lens more compact. When FOV is between 65° and 75°, the optical lens has a large field of view, the optical lens can obtain more scene content, and meet the monitoring needs inside the vehicle. When ImgH/F is between 1.2 and 1.4, the distortions produced by the optical lens may be effectively corrected, thus improving the imaging quality of the optical lens while reducing the difficulty of manufacturing the optical lens; the focal length of the optical lens may be controlled in a reasonable range, the optical lens can have a sufficient light-receiving area and sufficient field of view angle to meet the characteristics of the large field of view.

In a second aspect, the present application provides a camera module, the camera module includes an image sensor and the optical lens mentioned in the first aspect. The image sensor is located on the image side of the optical lens, the camera module with the optical lens mentioned in the second aspect has all the technical effects of the optical lens mentioned in the first aspect, and the camera module can meet the requirements of miniaturization design, and the camera module can have a large field of view.

In a third aspect, the present application provides a terminal device. The electronic device includes a housing and the camera module mentioned in the second aspect. The camera module is disposed in the housing. The terminal device with the camera module mentioned in the third aspect has all the technical effects of the camera module mentioned in the second aspect, and the terminal deice can meet the requirements of miniaturization design, and the terminal deice can have a large field of view and achieve excellent imaging quality.

## BRIEF DESCRIPTION OF THE DRAWINGS

Implementations of the present technology will now be described, by way of embodiment, with reference to the attached figures. Obviously, the drawings are only some embodiments of the present disclosure. For those ordinary skill in the art, other drawings can be obtained based on these drawings without creative work.

FIG. 1 is a schematic diagram of an optical lens of a first embodiment of the present application.
FIG. 2 shows a longitudinal spherical aberration diagram, an astigmatism diagram, and a distortion diagram of the optical lens of the first embodiment of the present application.
FIG. 3 is a schematic diagram of an optical lens of a second embodiment of the present application.
FIG. 4 shows a longitudinal spherical aberration diagram, an astigmatism diagram, and a distortion diagram of the optical lens of the second embodiment of the present application.
FIG. 5 is a schematic diagram of an optical lens of a third embodiment of the present application.
FIG. 6 shows a longitudinal spherical aberration diagram, an astigmatism diagram, and a distortion diagram of the optical lens of the third embodiment of the present application.
FIG. 7 is a schematic diagram of an optical lens of a fourth embodiment of the present application.
FIG. 8 shows a longitudinal spherical aberration diagram, an astigmatism diagram, and a distortion diagram of the optical lens of the fourth embodiment of the present application.
FIG. 9 is a schematic diagram of an optical lens of a fifth embodiment of the present application.
FIG. 10 shows a longitudinal spherical aberration diagram, an astigmatism diagram, and a distortion diagram of the optical lens of the fifth embodiment of the present application.
FIG. 11 is a schematic diagram of an optical lens of a sixth embodiment of the present application.
FIG. 12 shows a longitudinal spherical aberration diagram, an astigmatism diagram, and a distortion diagram of the optical lens of the sixth embodiment of the present application.
FIG. 13 is a schematic diagram of an optical lens of a seventh embodiment of the present application.
FIG. 14 shows a longitudinal spherical aberration diagram, an astigmatism diagram, and a distortion diagram of the optical lens of the seventh embodiment of the present application.
FIG. 15 is a schematic diagram of an optical lens of an eighth embodiment of the present application.
FIG. 16 shows a longitudinal spherical aberration diagram, an astigmatism diagram, and a distortion diagram of the optical lens of the eighth embodiment of the present application.
FIG. 17 is a schematic diagram of a camera module of an embodiment of the present application.
FIG. 18 is a schematic diagram of a terminal device of an embodiment of the present application.

## DETAILED DESCRIPTION

In the present invention, the terms "first", "second", etc. are used to distinguish between different devices or components and are not intended to indicate or imply the relative importance and number of the indicated devices or components.

The technical solutions of the present application will be further described below in connection with the embodiments and the accompanying drawings.

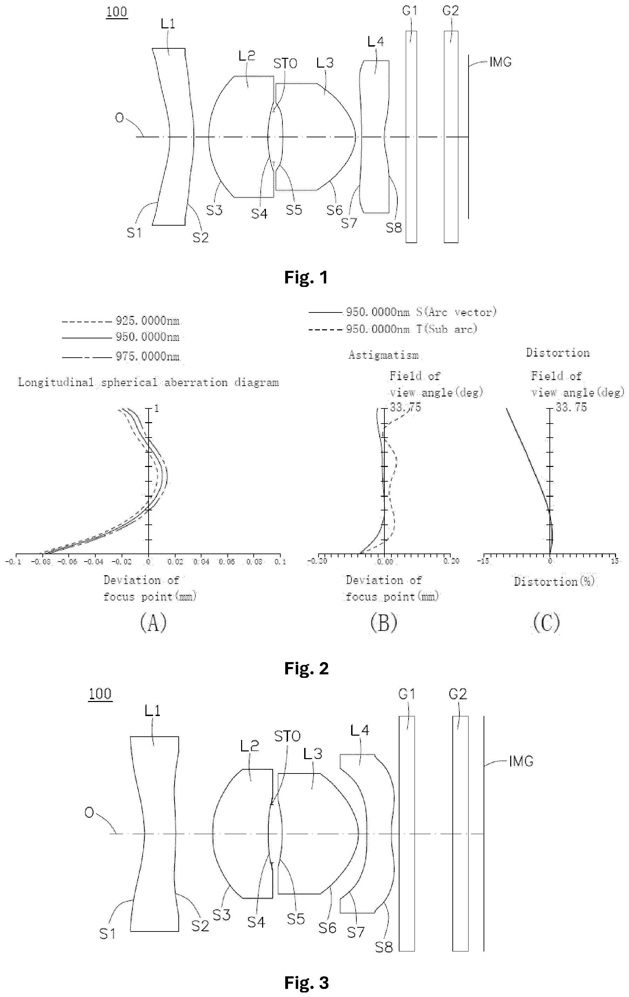

FIG. 1 illustrates an optical lens 100 of a first embodiment of the present application.

Referring to FIG. 1, the optical lens 100 includes four lenses with refractive power, the four lenses, from the object side to the image side along an optical axis O, sequentially includes a first lens L1, a second lens L2, a third lens L3, a fourth lens L4. During imaging, light rays enter the first lens L1, the second lens L2, the third lens L3 and the fourth lens L4 in sequence from the object side of the first lens L1 and are finally imaged on an imaging plane IMG of the optical lens 100.

The first lens L1 has negative refractive power, the second lens L2 has positive refractive power, the third lens L3 has positive refractive power, the fourth lens L4 has negative refractive power.

The object side surface S1 of the first lens L1 is concave near the optical axis O, and the image side surface S2 of the first lens L1 is convex near the optical axis O, the object side surface S3 of the second lens L2 is convex near the optical axis O, the image side surface S4 of the second lens L2 is concave near the optical axis O, the object side surface S5 of the third lens L3 is concave near the optical axis O, the image side surface S6 of the third lens L3 is convex near the optical axis O, the object side surface S7 of the fourth lens L4 is convex near the optical axis O, and the image side surface S8 of the fourth lens L4 is concave near the optical axis O.

In the optical lens 100 of the present application, when the light rays pass through the first lens L1 having negative refractive power, the light rays of the larger field of view may be effectively coupled into the optical lens 100, the object side surface S1 of the first lens L1 is concave near the optical axis O and the image side surface S2 of the first lens L1 is convex near the optical axis O, the field of view of optical lens 100 may be increased, and the total optical length of the optical lens 100 may be shortened. The second lens L2 has a positive refractive force, the object side surface S3 of the second lens L2 is convex near the optical axis O, and the image side surface S4 of the second lens L2 is concave near the optical axis O, the incident angle of the light rays on the object side surface of the second lens L2 and on the image side surface of the second lens L2 may be reduced, the reflection of the light rays on the surfaces of the lenses may be reduced, and the aberration may be corrected. The third lens L3 has positive refractive power, the object side surface S5 of the third lens L3 is concave near the optical axis O, and the image side surface S6 of the third lens L6 is convex near the optical axis O, the refractive force of the optical lens 100 may be distributed appropriately, the amplitude of the overall refractive force of the optical lens 100 moving towards the object side direction is reduced, and the total optical length of the optical lens 100 is shortened, thus meeting the requirements of miniaturization design. By combining the fourth lens L4 with negative refractive power, the field curvature and astigmatism of the optical lens 100 may be effectively corrected, and the optical lens 100 may be matched with the image sensor with larger main light angles, thereby improving the imaging quality. The object side surface S7 of the fourth lens L4 is convex near the optical axis O, the image side surface S8 of the fourth lens L4 is concave near the optical axis O, and the total optical length of the optical lens 100 may be further shortened, thereby making the structure of the four lens more compact.

In some embodiments, the optical lens 100 satisfies following relationship (1): 65°<FOV<75°. FOV is a maximum field of view of the optical lens 100. When FOV is between 65° and 75°, the optical lens 100 has a large field of view, the optical lens 100 can obtain more scene contents and meet the monitoring needs inside the vehicle.

In some embodiments, the optical lens 100 satisfies following relationship (2): 1.2<ImgH/F<1.4. ImgH is a diameter of a largest effective imaging circle on the imaging plane IMG of the optical lens 100, and F is an effective focal length of the optical lens 100. When ImgH/F is between 1.2 and 1.4, the distortions produced by the optical lens 100 may be effectively corrected, thereby improving the imaging quality of the optical lens 100 while reducing the manufacturing difficulty of the optical lens 100, the focal length of the optical lens 100 may be controlled in a reasonable range, and the optical lens 100 can have a sufficient light-receiving area and sufficient field of view angle to meet the characteristics of the large field of view and the large image plane.

The optical lens 100 may be applied to the terminal devices such as a cell phone, a tablet, a vehicle recorder, a security monitor, the materials of the first lens L1, the second lens L2, the third lens L3, and the fourth lens L4 may be made of plastic, and the optical lens can have good optical effects and good portability. In addition, the plastic material is easier to process the lenses, thereby reducing the processing cost of the optical lens.

The material of each of the lenses in the optical lens 100 can also be glass, and the lenses having a glass material are able to withstand higher or lower temperatures and have good optical effects and better stability.

In some embodiments, the optical lens 100 can also be provided with at least two lenses made of different materials, for example, a design combining a glass lens and a plastic lens may be used, but the specific configuration relationship may be determined according to the actual needs.

The optical lens further includes a diaphragm STO, the diaphragm STO may be an aperture diaphragm or a field of view diaphragm, and the diaphragm STO is disposed between the image side surface S4 of the second lens L2 and the object side surface S5 of the third lens L3. In other embodiments, the diaphragm STO can also be disposed between the object side of the optical lens 100 and the object side surface S1 of the first lens L1, or the diaphragm STO may be disposed between the first lens L1 and the second lens L2, which may be adjusted to be set according to the actual situation, the present application does not make specific limitations.

In some embodiments, the optical lens 100 further includes a filter G1, for example, the filter G1 may be an infrared bandpass filter, and the infrared bandpass filter is disposed between the image side surface S8 of the fourth lens L4 and the imaging plane IMG of the optical lens 100, and the infrared bandpass filter allows infrared light within the expected wavelength range to pass through, while light of other wavelengths outside the range will be filtered out and unable to pass through, thereby avoiding interference light that affects the normal imaging of infrared light and improving the quality of low light imaging.

In some embodiments, the optical lens 100 satisfies following relationship (3): 1.7<TTL/ImgH<1.9. TTL is a distance from the object side surface S1 of the first lens L1 to the imaging plane of the optical lens 100 along the optical axis O, which is the total optical length. Therefore, through the above relationships, combined with the reasonable configuration of the refractive power of each lens, the optical lens 100 can achieve good slimness, good aberration balance, and image quality improvement ability, while supporting high pixel image sensors. In addition, ImgH can determine the size of the image sensor, and the larger ImgH, the larger the maximum size of the image sensor that may be supported. If TTL/ImgH is greater than the upper limit of the relationship (3), although the optical lens 100 can obtain better balance of aberrations and resolution, with the increase of the photoreceptor chip, the total optical length will be difficult to be compressed, which makes the thinness and lightness of the optical lens 100 decrease. If TTL/ImgH is less than the lower limit of the above relationship (3), the optical lens 100 will have good thinness and lightness, but the overall size is too small, which will greatly limit the balance of aberration, the matching of photosensitive chips, and the optimization of resolution. Wherein the upper limit of the relationship (3) is 1.9, and the lower limit of the above relationship (3) is 1.7.

In some embodiments, the optical lens 100 satisfies following relationship (4): 30°<FOV/FNO<34°. FNO is the aperture number of the optical lens 100. When the optical lens 100 satisfies the relationship (4), the field of view angle and light flux of the optical lens 100 may be reasonably controlled, thereby improving the aberration of the fringe field of view, and preventing the optical lens 100 light flux from being too large. If FOV/FNO is greater than the upper limit of the relationship (4), the field of view angle of the optical lens 100 is too large, resulting in excessive aberrations in the edge field of view, and distortion of the periphery of the image, and also resulting in the aperture number being too small, making the throughput of the optical lens 100 too large, resulting in non-effective light also arriving at the imaging plane IMG, resulting in the imaging (especially at the edge of the field of view) appearing such as spherical aberration, field curvature, and other aberrations, which results in a decrease in the imaging performance of the optical lens 100. If FOV/FNO is less than the lower limit of the relationship (4), the light throughput of the optical lens 100 is insufficient, and the clarity of the captured image decreases. Wherein the upper limit of the relationship (4) is 34°, and the lower limit of the relationship (4) is 30°.

In some embodiments, the optical lens 100 satisfies following relationship (5): 2.1<TTL/F<2.5. When the optical lens 100 satisfies the relationship (5), the optical lens 100 can have a reasonable focal length, and the total length of the optical lens 100 may be controlled, which is beneficial for the miniaturization design of the optical lens 100. If TTL/F is less than the lower limit of the relationship (5), the focal length of the optical lens 100 is too long, which is not conducive to meeting the field of view range of the optical lens 100, resulting in limited field of view range of the optical lens 100 and less object space information obtained by the optical lens 100. If TTL/F is greater than the upper limit of the relationship (5), the total optical length of the optical lens 100 is too large, which is not beneficial for the miniaturization design of the optical lens 100. Wherein the lower limit of the relationship (5) is 2.1, and the upper limit of the relationship (5) is 2.5.

In some embodiments, the optical lens 100 satisfies following relationship (6): 1.4<SD11/SD21<1.7. SD11 is a maximum effective aperture of the object side surface S1 of the first lens L1, and SD21 is a maximum effective aperture of the object side surface S3 of the second lens L2. When the optical lens 100 satisfies the above relationship (6), it can effectively prevent the situation where the maximum effective aperture difference between the object side surface S1 of the first lens L1 and the object side surface S3 of the second lens L2 is too large, thereby facilitating the processing and molding of the first lens L1 and the second lens L2, and improving the stability of the assembly of the respective lenses of the optical lens 100. In addition, when the optical lens 100 satisfies the relationship (6), the incident angle of the light rays emitted from the edge of the first lens L1 entering the object side surface S3 of the second lens L2 may be reduced, and the sensitivity of the tilt tolerance of the second lens L2 may be reduced. When SD11/SD21 is greater than the upper limit of the relationship (6) or SD11/SD21 is less than the lower limit of the relationship (6), the maximum effective aperture difference between the object side surface S1 of the first lens L1 and the object side surface S3 of the second lens L2 is too large, resulting in a large step difference between the first lens L1 and the second lens L2, which increases the deflection angle of edge rays and increases the risk of ghost images, and the presence of stray light in the optical lens 100, which can easily reduce the imaging quality of the optical lens 100. Wherein the upper limit of the relationship (6) is 1.7, and the lower limit of the relationship (6) is 1.4.

In some embodiments, the optical lens 100 satisfies following relationship (7): 0.9<SD22/SD31<1.1. SD22 is the maximum effective aperture of the image side surface S4 of the second lens L2, and SD31 is the maximum effective aperture of the object side surface S5 of the third lens L3. When the optical lens 100 satisfies the above relationship (7), the incident angle of the light rays on the external field of view to the image side surface S4 of the second lens L2 may be reasonably controlled, and the incident angle of the light rays on the imaging plane IMG may be adjusted to be within a reasonable range, so as to make the height of the light in the external field of view drop in a suitable range, and the maximum effective aperture of the object side surface and the image side surface of the lenses is of an appropriate size, which is conducive to the miniaturization of the optical lens 100, while providing reasonable constraints on the angle of incidence of the main light ray, thereby ensuring the compatibility between the optical lens 100 and the image sensor, and preventing partial obstruction of edge light, thereby preventing excessive vignetting and ensuring that the diffraction limit is within a reasonable range. When SD22/SD31 is greater than the upper limit of the relationship (7), it causes the height of the external field of view to decrease too quickly, introduces excessive vignetting, and is not conducive to maintaining a high relative illuminance in the external field of view. When SD22/SD31 is lower than the lower limit of the above relationship (7), it causes the height of the external field of view light to rise, which can easily lead to excessive vector height of the image side surface S4 of the second lens L2 and the object side surface S5 of the third lens L3 at the maximum effective aperture, resulting in excessive surface curvature of the image side surface S4 of the second lens L2 and the object side surface S5 of the third lens L3, which has an adverse effect on the tolerance sensitivity of the optical lens 100.

Wherein the upper limit of the relationship (7) is 1.1, and the lower limit of the above relationship (7) is 0.9.

In some embodiments, the optical lens 100 satisfies following relationship (10): 1<SD41/SD32<1.5. SD41 is the maximum effective aperture of the object side surface S7 of the fourth lens L4, and SD32 is the maximum effective aperture of the image side surface S6 of the third lens L3. When the optical lens 100 satisfies the above relationship (10), the problem that the face shape of the fourth lens L4 is too curved may be effectively avoided, the processing difficulty of the fourth lens L4 to be increased, and the problem that a beam of light at a large angle cannot be incident on the optical lens 100 can also be effectively avoided, which causes the imaging quality of the optical lens 100 to be poor, and the problem of the surface shape of the fourth lens L4 being too flat may be effectively avoided, which increases the risk of ghosting in the optical lens 100. When SD41/SD32 is less than the lower limit of the relationship (10), the surface shape of the fourth lens L4 is too curved, which will increase the difficulty of processing the fourth lens L4, and cause large angle beams to not be incident on the optical lens 100, resulting in poor imaging quality. When SD41/SD32 is higher than the upper limit of the relationship (10), the surface shape of the object side S7 of the fourth lens L4 is too flat, which increases the risk of ghosting generated by the optical lens 100. Wherein the lower limit of the relationship (10) is 1, and the upper limit of the relationship (10) is 1.5.

In some embodiments, the optical lens 100 satisfies following relationship (11): -4<(F1+F2)/F<-1. F1 is the effective focal length of the first lens L1 and F2 is the effective focal length of the second lens L2. When the optical lens 100 satisfies the above relationship (11), it will facilitate the proper coordination of the refractive power of the first lens L1 and the second lens L2 in the optical lens 100, which is beneficial for large angle light to enter the optical lens 100 and obtain a larger field of view, and the surface design of the first lens L1 is simpler and more flexible, allowing it to support larger field of view and large aperture; it also facilitates the second lens L2 to converge the light rays from the first lens L1 to the optical lens 100, retarding the incident angle of the light rays, reducing the aberration, and simplifying the overall aberration correction of the optical lens 100.

In some embodiments, the optical lens 100 satisfies following relationship (12): -5<F1/F<-2. Specifically, F1/F may be -4.607, -2.946, -2.864, -2.746, -3.441, -2.809 or -2.756. When the optical lens 100 satisfies the above relationship (12), the ratio of the focal length of the first lens L1 to the focal length of the optical lens 100 may be reasonably configured, so that for the entire optical lens 100, the refractive force of the first lens L1 will not be too strong, so as to avoid the introduction of excessive spherical aberration, and so as to make the optical lens 100 have good imaging quality.

In some embodiments, the optical lens 100 satisfies following relationship (13): 2<F1/F4<6.1. F4 is the effective focal length of the fourth lens L4. By reasonably setting the focal length relationship of the first lens and last lens in the optical lens 100, the area of light rays entering the imaging plane IMG is increased while ensuring that as much light rays as possible is obtained into the optical lens 100, so as to better achieve a balance between the field of view range of the optical lens 100 and the size of the imaging plane IMG.

In some embodiments, the optical lens 100 satisfies following relationship (14): 3<ΣCT/ΣAT<6. ΣCT is the sum of the thicknesses of all the lenses in the first lens L1 to the fourth lens L4 at the optical axis O, and ΣAT is the sum of the gaps between two adjacent lenses in the first lens L1 to the fourth lens L4. When the optical lens 100 satisfies the relationship (14), the overall structure of the optical lens 100 may be more compact, the total length of the optical lens 100 may be shortened to meet the requirements of the miniaturization design. When ΣCT/ΣAT is greater than the upper limit of the above relationship (14), the total thickness of the first lens L1 to the fourth lens L4 at the optical axis O is large, which is not beneficial for the miniaturization design of the optical lens 100; when ΣCT/ΣAT is less than the lower limit of the above relationship (14), the sum of the gaps between the two adjacent lenses in the first lens L1 to the fourth lens L4 increases, and the field curvature increases, which is not beneficial for the improving the imaging quality of the optical lens 100. Wherein the upper limit of the above relationship (14) is 6, and the lower limit of the above relationship (14) is 3.

In some embodiments, the optical lens 100 satisfies following relationship (15): 2<CT3/CT4<3.4. CT3 is the thickness of the third lens L3 at the optical axis O, and CT4 is the thickness of the fourth lens L4 at the optical axis O. When the optical lens 100 satisfies the above relationship (15), the thickness of the third lens L3 at the optical axis O and the thickness of the fourth lens L4 at the optical axis O may be within a reasonable range, and the stability of the assembly of the optical lens 100 may be improved. When CT3/CT4 is less than the lower limit of the above relationship (15), the thickness of the fourth lens L4 relative to the third lens L3 at the optical axis O is too large, resulting in the fourth lens L4 being too thick and adversely affecting the stability of the assembly of the optical lens 100, which is not beneficial for the miniaturization design of the optical lens 100. When CT3/CT4 is greater than the upper limit of the above relationship (15), the thickness of the fourth lens L4 relative to the third lens L3 at the optical axis O is too small, resulting in the fourth lens L4 being too thin and adversely affecting the stability of the assembly of the optical lens 100, and the fourth lens L4 being too thin improves the difficulty of the production processing. Wherein the lower limit of the above relationship (15) is 2, and the upper limit of the above relationship (15) is 3.4.

In some embodiments, the optical lens 100 satisfies following relationship (16): 4<TTL/CT3<4.4. TTL is the distance from the object side surface S1 of the first lens L1 to the imaging plane IMG of the optical lens 100 at the optical axis O, and CT3 is the thickness of the third lens L3 at the optical axis O. When the optical lens 100 satisfies the above relationship (16), the compactness of the optical lens 100 may be enhanced and the total length of the optical lens 100 may be shortened, and the eccentricity sensitivity of the third lens L3 may be reduced, thereby facilitating the production and assembly of the optical lens 100. When TTL/CT3 is greater than the upper limit of the above relationship (16), the total length of the optical lens 100 is too long, which is not beneficial for the miniaturization design of the optical lens 100, and the production cost may be reduced; when TTL/CT3 is less than the lower limit of the above relationship (16), the central thickness of the third lens L3 is too large, which leads to an increase in the eccentricity sensitivity of the third lens L3, it is not beneficial for the assembly of the third lens L3. Wherein the upper limit of the above relationship (16) is 4.4, and the lower limit of the above relationship (16) is 4.

In some embodiments, the optical lens 100 satisfies following relationship (17): 2<F2/CT2<3.7. CT2 is the thickness of the second lens L2 at the optical axis O. When the optical lens 100 satisfies the above relationship (17), the focal length of the second lens L2 and the thickness of the second lens L2 at the optical axis O may be reasonably configured to effectively correct the aberration of the optical lens 100. When F2/CT2 is less than the lower limit of the above relationship (17), it makes the effective focal length of the second lens L2 too small, causing the refractive force of the second lens L2 to be too strong, it is easy to produce a large aberration. When F2/CT2 is greater than the upper limit of the above relationship (17), it makes the effective focal length of the second lens L2 too large, which is not beneficial for reasonably distributing the refractive force of the second lens L2, and due to the insufficient refractive force, it is easy to produce a higher order spherical aberration, coma aberration and other phenomena at the second lens L2, thereby affecting the imaging quality of the optical lens 100. Wherein the lower limit of the above relationship (17) is 2, and the upper limit of the above relationship (17) is 3.7.

In some embodiments, the optical lens 100 satisfies following relationship (18): -2<R11/R42<-1. R11 is a curvature radius of the object side surface S1 of the first lens L1 at the optical axis O, R42 is a curvature radius of the image side surface S8 of the fourth lens L4 at the optical axis O. When the optical lens 100 satisfies the above relationship (18), the processing difficulty may be effectively reduced, and the chromatic aberration balancing ability and aberration balancing ability of the optical lens 100 can also be improved.

In some embodiments, the optical lens 100 satisfies following relationship (19): -7<(R21+R22)/(R21-R22)<-2. R21 is a curvature radius of the object side surface S3 of the second lens L2 at the optical axis O, R22 is a curvature radius of the image side surface S4 of the second lens L2 at the optical axis O. When the optical lens 100 satisfies the above relationship (19), the degree of bending and the thickness ratio trend of the object side S3 and the image side S4 of the second lens L2 may be effectively controlled to limit the shape change of the second lens L2, so that not only the spherical aberration and the astigmatism of the optical lens 100 may be corrected and the imaging quality of the optical lens 100 may be improved; the complexity of the face shape of the second lens L2 may be reduced and the processability of the second lens L2 may be improved, so as to reduce the risk that the imaging quality of the optical lens 100 is degraded due to poor processing and shaping, thereby ensuring the imaging quality of the optical lens 100. When (R21+R22)/(R21-R22) is greater than the upper limit of the above relationship (19), the face shape of the image side surface S4 of the second lens L2 near the optical axis O is too smooth, making it difficult to correct the aberration of the optical lens 100, and the astigmatism of the external field of view is too large, resulting in a decrease in the imaging quality of the optical lens 100. When (R21+R22)/(R21-R22) is less than the lower limit of the above relationship (19), the degree of bending of the face shape of the image side surface S4 of the second lens L2 near optical axis O is too large, which is likely to lead to poor processing and shaping, thereby affecting the imaging quality of the optical lens 100. The upper limit of the above relationship (19) is -2, and the lower limit of the above relationship (19) is -7.

In some embodiments, the optical lens 100 satisfies following relationship (20): 4<R41/R42<20. R41 is a curvature radius of the object side surface S7 of the fourth lens L4 at the optical axis O. When the optical lens 100 satisfies the above relationship (20), the aberrations generated by the optical lens 100 may be corrected, so that the refractive power of each lens in the direction perpendicular to the optical axis O may be evenly distributed, thereby greatly correcting the distortion and aberration generated by the front lens, and avoiding excessive bending of the fourth lens L4, making it easy to manufacture.

In some embodiments, the optical lens 100 satisfies following relationship (21): 0.8<CT1/CT4<1.6. CT1 is the thickness of the first lens L1 at the optical axis O. When the optical lens 100 satisfies the above relationship (21), the thicknesses of the first lens L1 and the fourth lens L4 may be reasonably configured, so as to be able to reasonably distribute the refractive force of the lens in the optical lens 100, thereby effectively correcting the spherical aberration of the optical lens 100, and the thicknesses of the first lens L1 and the fourth lens L4 can also be relatively uniform to satisfy the process requirements.

In some embodiments, the optical lens 100 satisfies following relationship (22): 1.2<CT3/CT2< 1.6. CT2 is the thickness of the second lens L2 at the optical axis O. When the optical lens 100 satisfies the above relationship (22), the thickness of the second lens L2 at the optical axis O and the thickness of the third lens L3 at the optical axis O is within a reasonable range, the stability of the assembly of the optical lens 100 may be improved, and the resolving power of the optical lens 100 may be improved, the astigmatism of the optical lens 100 may be corrected, and the imaging clarity of the optical lens 100 may be improved.

In some embodiments, the optical lens 100 satisfies following relationship (23): 0.3<CT23/CT12< 1.3. CT23 is a distance between the image side surface S4 of the second lens L2 and the object side surface S5 of the third lens L3 at the optical axis O, and CT12 is a distance between the image side surface S2 of the first lens L1 and the object side surface S3 of the second lens L2 at the optical axis O. When the optical lens 100 satisfies the above relationship (23), the distance between the first lens L1 and the second lens L2, and the distance between the second lens L2 and the third lens L3 may be greatly compressed, and the total length of the optical lens 100 may be effectively controlled, miniaturization is achieved, and the off-axis aberration is corrected.

In some embodiments, the optical lens 100 satisfies following relationship (24): 52°<FOV*F/ImgH<55°. When the optical lens 100 satisfies the above relationship (24), a large field of view is achieved, the image height of the optical lens 100 and the image plane size on the imaging plane IMG may be ensured, so that the optical lens 100 has a suitable image plane size and improves the brightness of the imaging plane IMG of the optical lens 100. When the optical lens 100 is greater than the upper limit of the above relationship (24), the image height of the optical lens 100 is small, resulting in the image in the imaging size is too small, and the imaging plane IMG of the optical lens 100 is difficult to match the settings with the image sensor, making the relative illumination of the imaging plane IMG greatly reduced, the brightness of the imaging plane IMG is relatively dark, the image captured is easy to find the phenomenon of the dark corners, and the imaging quality of the optical lens 100 is reduced; when the optical lens 100 is less than the lower limit of the above relationship (24), the field of view angle of the optical lens 100 is smaller, resulting in a narrower field of view range captured by the optical lens 100, which is not beneficial for achieving a wide angle. Wherein the upper limit of the above relationship (24) is 55°, and the lower limit of the above relationship (24) is 52°.

In some embodiments, the optical lens 100 satisfies following relationship (25): 1.7<ImgH/(F*tan(FOV/2))<2. When the optical lens 100 satisfies the above relationship (25), the total optical length of the optical lens 100 may be shortened, the aberration of the optical lens 100 may be corrected, and the optical lens 100 can achieve excellent imaging quality while meeting the requirements of miniaturized design, the optical lens 100 can have a large angle of view and a large image plane, so that the optical lens 100 can obtain more scene contents and enrich the imaging information. When ImgH/(F*tan(FOV/2)) is greater than the upper limit of the above relationship (25), the field of view of the optical lens 100 is too small, the field of view range of the optical lens 100 is reduced, resulting in incomplete imaging information of the optical lens 100, affecting the imaging quality of the optical lens 100, or the focal length of the optical lens 100 is too long to compress the total optical length of the optical lens 100, resulting in an increase in the volume of the optical lens 100, which is not beneficial for meeting the miniaturization design requirements of the optical lens 100. When ImgH/(F*tan(FOV/2)) is less than the lower limit of the above relationship (25), the field of view of optical lens 100 is too large, causing excessive distortion of the external field of view, resulting in distortion of the image periphery, and reducing the imaging performance of optical lens 100. Wherein the upper limit of the above relationship (25) is 2, and the lower limit of the above relationship (25) is 1.7.

In some embodiments, the optical lens 100 satisfies following relationship (26): 2<FNO<2.3. FNO is the aperture number of the optical lens 100. When the optical lens 100 satisfies the above relationship (26), the optical lens 100 has sufficient light rays intake, which can make the images captured by the optical lens 100 clearer, making it suitable for shooting high-quality night scenes, starry sky and other low brightness object space scenes. In addition, it can also avoid introducing excessive aberrations, enabling the optical lens 100 to achieve overall balance.

In some embodiments, the optical lens 100 satisfies following relationship (27): 1<F/F2< 1.7. When the optical lens 100 satisfies the above relationship (27), the deflection angle of light rays at the second lens L2 may be reduced, and the positive refractive power provided by the second lens L2 can effectively balance the spherical aberration of the optical lens 100, effectively correct the astigmatism and achieve good imaging quality, and the center thickness of the second lens L2 may be reasonably configured, thereby shortening the total length of the optical lens 100, and expanding the field of view of the optical lens 100.

In some embodiments, the optical lens 100 satisfies following relationship (28): 1.2<F/F3<2. F3 is the effective focal length of the third lens L3. When the optical lens 100 satisfies the above relationship (28), it is beneficial to balance the spherical aberration generated by the second lens L2 and effectively correct the off-axis aberration of the optical lens 100, thereby improving the imaging quality.

In some embodiments, the optical lens 100 satisfies following relationship (29): -1.4<F/F4<-0.8. F4 is the effective focal length of the fourth lens L4. When the optical lens 100 satisfies the above relationship (29), the fourth lens L4 provides a portion of the negative refractive power for the optical lens 100, which may be used to adjust the overall refractive power of the optical lens 100, the fourth lens L4 forms a Gaussian like structure with the first lens L1, the second lens L2, and the third lens L3, which can balance the distortion generated by the first lens L1, the second lens L2, and the third lens L3, avoid high-order aberrations caused by excessive refractive index, and thus improve the imaging quality of the optical lens 100. When F/F4 is less than the lower limit of the above relationship (29), the effective focal length of the optical lens 100 is small, which is not beneficial for meeting the telephoto characteristics. When F/F4 is greater than the upper limit of the above relationship (29), the focal length of the fourth lens L4 is large, which makes it difficult to balance the aberrations produced by the first lens L1, the second lens L2, and the third lens L3, and the refractive index of the optical lens 100 is too large, which can easily cause high-order aberrations. Wherein the lower limit of the above relationship (29) is -1.4, and the upper limit of the above relationship (29) is -0.8.

In some embodiments, the optical lens 100 satisfies following relationship (30): 1.4<F2/F3<3.2. When the optical lens 100 satisfies the above relationship (30), the contribution of the refractive power of the second lens L2 and the refractive power of the third lens L3 to the optical lens 100 may be effectively regulated, the off-axis coma of the optical lens 100 may be corrected, the tolerance sensitivity of each lens may be reduced. When F2/F3 is greater than the upper limit of the above relationship (30), the second lens L2 has insufficient refractive power, making it difficult to tune the angle of light rays passing through the second lens L2. When F2/F3 is less than the lower limit of the above relationship (30), the third lens L3 has insufficient refractive power, which is not beneficial for correcting the aberration generated by the first lens L1 and the second lens L2, and this will reduce the imaging quality of the optical lens 100. Wherein the upper limit of the above relationship (30) is 3.2, and the lower limit of the above relationship (30) is 1.4.

In some embodiments, the optical lens 100 satisfies following relationship (31): -3<R21/R32<-1.5. R21 is a curvature radius of the object side surface S3 of the second lens L2 at the optical axis O, R32 is a curvature radius of the image side surface S6 of the third lens L3 at the optical axis O. When the optical lens 100 satisfies the above relationship (31), a more reasonable distribution of the refractive force may be can provided, the curvature radius of the second lens L2 and the curvature radius of the third lens L3 may be effectively controlled, a gently varying surface shape is maintained, the aberration of the optical lens 100 is reasonably balanced, and the difficulty of the assembling process caused by the large difference in the refractive force of the various lenses in the optical lens 100 may be avoided.

In some embodiments, the optical lens 100 satisfies following relationship (32): -1.65<R22/R31<-0.45. R31 is a curvature radius of the object side surface S5 of the third lens L3 at the optical axis O. When the optical lens 100 satisfies the above relationship (32), the curvature radius of the image side surface S4 of the second lens L2 and the object side surface S5 of the third lens L3 at the optical axis O may be reasonably configured, so as to effectively reduce the angle of deflection of the light rays when it exits the first lens L1 and then enters the second lens L2, thereby reducing the sensitivity of the optical lens 100, and effectively suppressing the generation of ghost images.

In some embodiments, the optical lens 100 satisfies following relationship (33): -1<R11/F<-0.6. R11 is a curvature radius of the object side surface S1 of the first lens L1 at the optical axis O. When the optical lens 100 satisfies the above relationship (33), the refractive power of the first lens L1 may be controlled within a reasonable range, the refractive power borne by the first lens L1 in the optical lens 100 may be balanced, and the advanced coma of the optical lens 100 may be balanced, thereby making the optical lens 100 have good imaging quality.

In some embodiments, the optical lens 100 satisfies following relationship (34): 1<SD11/ImgH<1.1. When the optical lens 100 satisfies the above relationship (34), the first lens L1 matches the size of the half image height, the half image height refers to half of the image height corresponding to the maximum field of view of the optical lens 100, which is beneficial for the formation of a folded periscope structure of the optical lens 100. If SD11/ImgH is greater than the upper limit of the above relationship (34) or SD11/ImgH is less than the lower limit of the above relationship (34), the maximum effective aperture of the first lens L1 is too large or too small, which will lead to a large segmental difference between each lens and the imaging plane IMG, which is not conducive to the assembly of the optical lens 100 and the design of the support between each lens. Wherein the upper limit of the above relationship (34) is 1.1, and the lower limit of the above relationship (34) is 1.

In some embodiments, the optical lens 100 satisfies following relationship (35): 1.5<TTL/ΣCT<1.8. When the optical lens 100 satisfies the above relationship (35), the proportion of the center thickness of each lens in the total length of the optical lens 100 may be effectively controlled, so as to reasonably configure the air gap of each lens and the distance from the fourth lens L4 to the imaging plane IMG. On one hand, it can effectively control the distortion of the optical lens 100, so that the optical lens 100 has good distortion performance, thereby improving the imaging quality of the optical lens 100. On another hand, it can also improve the spatial compactness of the optical lens 100, and the total length of the optical lens 100 may be shortened, and miniaturization of the optical lens 100 may be achieved.

In some embodiments, the optical lens 100 satisfies following relationship (36): 1.5<R12/R11<2.5. R12 is a curvature radius of the image side surface S2 of the first lens L1 at the optical axis O. When the optical lens 100 satisfies the above relationship (36), the shape and degree of bending of the first lens L1 may be controlled, the introduction of aberrations in the incident light rays is reduced, the aberration balance of the optical lens 100 is promoted, the processing difficulty of the first lens L1 is reduced, and the processing processability of the optical lens is improved.

In some embodiments, the optical lens 100 satisfies following relationship (37): 1<R22/R21<3. When the optical lens 100 satisfies the above relationship (37), by adjusting the curvature radius of the second lens L2, the spherical aberration and the astigmatism of the optical lens 100 may be effectively corrected, and the sensitivity of the second lens L2 may be reduced to reduce the effect of the field curvature of the optical lens 100 in the focusing process of different object distances, and to improve the imaging quality.

In some embodiments, the optical lens 100 satisfies following relationship (38): 3<R31/R32<6. When the optical lens 100 satisfies the above relationship (38), by matching the concave convex surface shape of the third lens L3, the curvature radius and surface shape of the object side surface S5 and image side surface S6 of the third lens L3 may be optimized, which is beneficial for the third lens L3 to reasonably match the negative refractive power of the first lens L1 and

**EP 4 550 019 A2**

the positive refractive power of the second lens L2, the axial spherical aberration of the optical lens 100 may be reduced, the optical path direction from the third lens L3 to the fourth lens L4 may be corrected, and the occurrence of optical distortion may be reduced.

The following will provide a detailed explanation of the optical lens based on specific parameters.

First embodiment

Referring to FIG. 1, the optical lens 100, from the object side to the image side along the optical axis O, sequentially includes a first lens L1, a second lens L2, a diaphragm STO, a third lens L3, a fourth lens L4, a filter G1, and a protective glass G2.

The first lens L1 has negative refractive power, the second lens L2 has positive refractive power, the third lens L3 has positive refractive power, and the fourth lens L4 has negative refractive power.

The object side surface S1 of the first lens L1 is concave near the optical axis O, and the image side surface S2 of the first lens L1 is convex near the optical axis O. The object side surface S3 of the second lens L2 is convex near the optical axis O, and the image side surface S4 of the second lens L2 is concave near the optical axis O. The object side surface S5 of the third lens L3 is concave near the optical axis O, and the image side surface S6 of the third lens L3 is convex near the optical axis O. The object side surface S7 of the fourth lens L4 is convex near the optical axis O, and the image side surface S8 of the fourth lens L4 is concave near the optical axis O.

The elements along the optical axis O of the optical lens 100 from the object side to the image side are sequentially arranged in the order of the elements from top to bottom in Table 1a. In the same lens, the surface with the smaller surface numeral is the object side of the lens, and the surface with the larger surface numeral is the image side of the lens, e.g., the surface numerals S1 and S2 are the object side surface S1 and image side surface S2 of the first lens L1, respectively. The Y radius in Table 1a is the curvature radius of the object side surface or the image side surface of the related surface numeral at the optical axis O. In a "thickness" column of each lens, the first value is the thickness of the lens at the optical axis O, and the second value is the distance from the image side surface of the lens to the next surface at the optical axis O. The value of the diaphragm STO in the "thickness" column is the distance from the diaphragm STO to the vertex of the latter surface (the vertex refers to the intersection point of the surface and the optical axis O) on the optical axis O. By default, the direction from the object side surface S1 of the first lens L1 to the image side surface of the last lens is the positive direction of the optical axis O, when the thickness of the diaphragm STO is negative, it indicates that the diaphragm STO is set to the image side of the vertex of the latter surface, and when the thickness of the diaphragm STO is positive, the diaphragm STO is set to the object side of the vertex of the latter surface. The units of Y radius, thickness, focal length, and Y aperture in Table 1a are mm. The reference wavelength for the refractive index and Abbe number of each lens in Table 1a is 588 nm, the reference wavelength for the focal length of each lens in Table 1a is 950 nm.

Table 1a

| First embodiment | | | | | | | | |
|---|---|---|---|---|---|---|---|---|
| F=3.74mm, FNO=2.2, FOV=67.5°, TTL=8.12mm | | | | | | | | |
| Surface numeral | Surface name | Surface type | Y radius | Thickness | Material | Refractive index | Abbe number | Focal Length |
| object surface | | sphere | infinity | 750 | | | | |
| 1 | first lens | asphere | -2.7619 | 0.656 | plastics | 1.53600 | 56.0 | -17.23 |
| 2 | | asphere | -4.2667 | 0.407 | | | | |
| 3 | second lens | sphere | 2.4534 | 1.630 | glass | 1.84666 | 23.8 | 5.86 |
| 4 | | sphere | 3.3751 | 0.151 | | | | |
| 5 | diaphragm | sphere | infinity | 0.260 | | | | |
| 6 | third lens | asphere | -4.3661 | 1.986 | plastics | 1.53600 | 56.0 | 1.92 |
| 7 | | asphere | -0.9639 | 0.162 | | | | |
| 8 | fourth lens | asphere | 12.171 9 | 0.623 | plastics | 1.64000 | 23.5 | -2.91 |
| 9 | | asphere | 1.5791 | 0.600 | | | | |
| 10 | filter | sphere | infinity | 0.300 | glass | 1.51680 | 64.2 | |
| 11 | | sphere | infinity | 0.743 | | | | |

(continued)

| Surface numeral | Surface name | Surface type | Y radius | Thickness s | Material | Refractive index | Abbe number | Focal Length |
|---|---|---|---|---|---|---|---|---|
| 12 | protective glass | sphere | infinity | 0.400 | glass | 1.51680 | 64.2 | |
| 13 | | sphere | infinity | 0.200 | | | | |
| 14 | imaging plane | | infinity | | | | | |

**First embodiment**

**F=3.74mm, FNO=2.2, FOV=67.5°, TTL=8.12mm**

Table 1b

| Surface numeral | 1 | 2 | 6 | 7 | 8 | 9 |
|---|---|---|---|---|---|---|
| K | 0.0000E+00 | 0.0000E+00 | 5.5163E+00 | -6.8961E-01 | -4.3135E+01 | -7.1020E-01 |
| A3 | 0.0000E+00 | 0.0000E+00 | 0.0000E+00 | 0.0000E+00 | -9.5899E-02 | -8.5319E-02 |
| A4 | 5.0294E-02 | 4.1102E-02 | -5.2664E-02 | 1.5236E-01 | 3.3071E-02 | -2.9601E-01 |
| A5 | 0.0000E+00 | 0.0000E+00 | 0.0000E+00 | 0.0000E+00 | -3.3717E-02 | 2.0559E-01 |
| A6 | -8.1704E-03 | -7.1383E-03 | -1.6943E-01 | -8.0016E-02 | 3.9329E-02 | 8.2747E-03 |
| A7 | 0.0000E+00 | 0.0000E+00 | 0.0000E+00 | 0.0000E+00 | 2.9298E-03 | -1.3262E-02 |
| A8 | 9.8824E-04 | 2.5209E-04 | 5.5925E-01 | 6.1463E-02 | -1.6007E-02 | -3.0433E-02 |
| AI0 | -3.0859E-05 | 8.5189E-05 | -9.6253E-01 | -5.0601E-02 | 5.5839E-03 | 1.4800E-02 |
| A12 | -5.5504E-07 | -1.5722E-06 | 8.7423E-02 | 3.4235E-02 | -1.4170E-03 | -3.4860E-03 |
| A14 | -9.3380E-07 | -3.4737E-06 | 1.3911E+00 | -1.2697E-02 | 1.9108E-04 | 4.2963E-04 |
| A16 | 1.2814E-07 | 3.6409E-07 | -1.0028E+00 | 1.9130E-03 | -9.8191E-06 | -2.2048E-05 |

The aspherical coefficients of the image side or object side of the optical lens 100 provided with an aspherical surface are given by Table 1b, the numerals 1, 2, 6, 7, 8, and 9 respectively represent the object side surface S1, the image side surface S2, the object side surface S6, the image side surface S7, the object side surface S8, and the image side surface S9, K-A20 from top to bottom represent the types of aspherical coefficients, K is cone constant, A3 is cubic aspherical coefficient, A4 is quadratic aspherical coefficient, A5 is quintic aspherical coefficient, A6 is sextic aspherical coefficient. The aspherical coefficient formula is as follows:

$$Z = \frac{cr^2}{1 + \sqrt{1 - (k+1)c^2r^2}} + \sum Air^i$$

Wherein, Z is a distance from the corresponding point of the aspherical surface to a plane tangent to the vertex, r is a distance from the corresponding point of the aspherical surface to the optical axis, c is a curvature of a vertex of the aspherical surface, k is cone constant, and Ai is a coefficient corresponding to the i$^{th}$ high-order term in the above aspherical surface formula.

(A) in FIG. 2 illustrates a graph of the light spherical aberration of the optical lens 100 of the first embodiment at wavelengths of 975 nm, 950 nm, and 925 nm, The horizontal axis along the X-axis represents the deviation of focus point, and the vertical axis along the Y-axis represents the normalized field of view, the values of the convergence point deviation in the first embodiment are all less than 0.1 mm, and the optical lens 100 has a better value of spherical aberration, indicating that the optical lens 100 has a better imaging quality.

(B) in FIG. 2 shows a light dispersion diagram of the optical lens 100 in the first embodiment at a wavelength of 950 nm, the horizontal axis along the X-axis represents the deviation of focus point, the vertical axis along the Y-axis represents the field of view angle, and unit is deg, the astigmatism curves represent the sub-arc imaging surface bending T and the arc-vector imaging surface bending S, the maximum values of both the sub-arc curvature and the arc-vector curvature are less than 0.15 mm, the image dispersion of the optical lens 100 is better compensated at this wavelength.

(C) in FIG. 2 shows the distortion curve of the optical lens 100 in the first embodiment at a wavelength of 950 nm. The horizontal axis along the X-axis represents distortion, the vertical axis along the Y-axis represents the field of view angle, and unit is deg, at a wavelength of 950 nm, the maximum distortion is less than 15%, and the distortion of the optical lens 100 may be corrected.

Second embodiment

FIG. 3 illustrates an optical lens 100 of a second embodiment of the present application. The optical lens 100, from the object side to the image side along the optical axis O, sequentially includes a first lens L1, a second lens L2, a diaphragm STO, a third lens L3, a fourth lens L4, a filter G1, and a protective glass G2.

In the second embodiment, the refractive force and surface type of each lens are consistent the refractive force and surface type of each lens in the first embodiment.

The other parameters in the second embodiment are given in the following Table 2a, and the definitions of each parameter may be obtained from the description of the first embodiment mentioned above, which will not be repeated here. The units of Y radius, thickness, focal length, and Y aperture in Table 2a are mm. The reference wavelength for the refractive index and Abbe number of each lens in Table 2a is 588 nm, and the reference wavelength for the focal length of each lens in Table 2a is 950 nm.

Table 2a

| Second embodiment | | | | | | | | |
|---|---|---|---|---|---|---|---|---|
| F=3.47mm, FNO=2.2, FOV=69.5°, TTL=8.47mm | | | | | | | | |
| Surface numeral | Surface name | Surface type | Y radius | Thickness | Materia 1 | Refractive index | Abbe number | Focal lengt |
| object surface | | sphere | infinity | 750 | | | | |
| 1 | first lens | asphere | -2.9315 | 0.799 | plastics | 1.53600 | 56.0 | - 10.22 |
| 2 | | asphere | -6.8956 | 0.938 | | | | |
| 3 | second lens | sphere | 2.2015 | 1.421 | glass | 1.84666 | 23.8 | 4.28 |
| 4 | | sphere | 3.9540 | 0.097 | | | | |
| 5 | diaphragm | | infinity | 0.259 | | | | |
| 6 | third lens | asphere | -7.0363 | 1.946 | plastics | 1.53600 | 56.0 | 2.71 |
| 7 | | asphere | -1.3226 | 0.225 | | | | |
| 8 | fourth lens | asphere | 10.5056 | 0.624 | plastics | 1.64000 | 23.5 | -4.23 |
| 9 | | asphere | 2.1024 | 0.200 | | | | |
| 10 | Filter | sphere | infinity | 0.400 | glass | 1.51680 | 64.2 | |
| 11 | | sphere | infinity | 0.965 | | | | |
| 12 | protective glass | sphere | infinity | 0.400 | glass | 1.51680 | 64.2 | |
| 13 | | sphere | infinity | 0.200 | | | | |
| 14 | imaging plane IMG | | infinity | | | | | |

Table 2b

| Surface numeral | 1 | 2 | 6 | 7 | 8 | 9 |
|---|---|---|---|---|---|---|
| K | 0.0000E+00 | 0.0000E+00 | 5.5163E+00 | -6.8961E-01 | -4.3135E+01 | -7.1020E-01 |
| A3 | 0.0000E+00 | 0.0000E+00 | 0.0000E+00 | 0.0000E+00 | -9.5899E-02 | -8.5319E-02 |
| A4 | 5.0294E-02 | 4.1102E-02 | -5.2664E-02 | 1.5236E-01 | 3.3071E-02 | -2.9601E-01 |
| A5 | 0.0000E+00 | 0.0000E+00 | 0.0000E+00 | 0.0000E+00 | -3.3717E-02 | 2.0559E-01 |

(continued)

| Surface numeral | 1 | 2 | 6 | 7 | 8 | 9 |
|---|---|---|---|---|---|---|
| A6 | -8.1704E-03 | -7.1383E-03 | -1.6943E-01 | -8.0016E-02 | 3.9329E-02 | 8.2747E-03 |
| A7 | 0.0000E+00 | 0.0000E+00 | 0.0000E+00 | 0.0000E+00 | 2.9298E-03 | -1.3262E-02 |
| A8 | 9.8824E-04 | 2.5209E-04 | 5.5925E-01 | 6.1463E-02 | -1.6007E-02 | -3.0433E-02 |
| A10 | -3.0859E-05 | 8.5189E-05 | -9.6253E-01 | -5.0601E-02 | 5.5839E-03 | 1.4800E-02 |
| A12 | -5.5504E-07 | -1.5722E-06 | 8.7423E-02 | 3.4235E-02 | -1.4170E-03 | -3.4860E-03 |
| A14 | -9.3380E-07 | -3.4737E-06 | 1.3911E+00 | -1.2697E-02 | 1.9108E-04 | 4.2963E-04 |
| A16 | 1.2814E-07 | 3.6409E-07 | -1.0028E+00 | 1.9130E-03 | -9.8191E-06 | -2.2048E-05 |

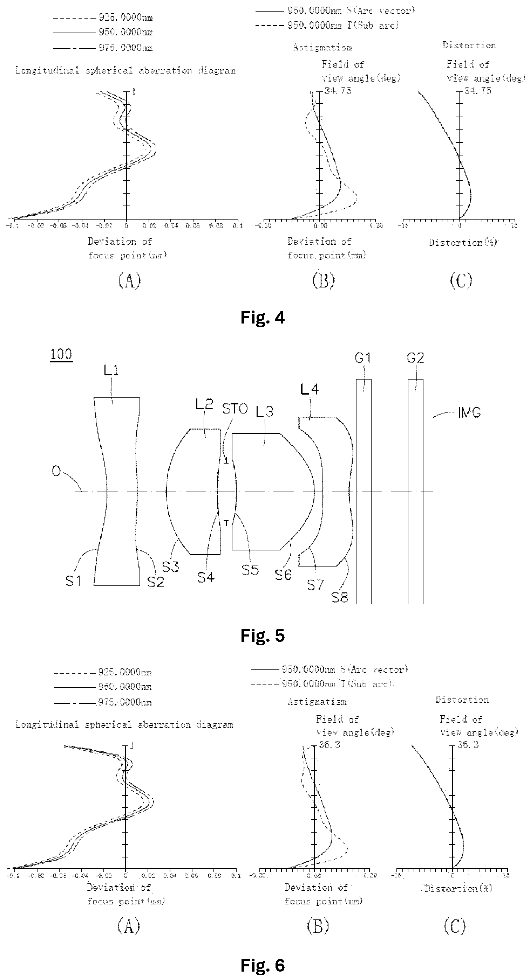

Referring to FIG. 4, as can be seen from the longitudinal spherical aberration graph (A), the astigmatism graph (B), and the distortion curve graph (C) in FIG. 4, the longitudinal spherical aberration, astigmatism, and distortion of the optical lens 100 in the second embodiment are well controlled, and thus the optical lens 100 of the embodiment has a good imaging quality. With respect to the wavelengths corresponding to each curve in (A) of FIG. 4, (B) of FIG. 4, and (C) of FIG. 4 reference may be made to what is described in the first embodiment with respect to (A) of FIG. 2, (B) of FIG. 2, and (C) of FIG. 2, and no further description will be made herein.

Third embodiment

FIG. 5 illustrates an optical lens 100 of a third embodiment of the present application. The optical lens 100, from the object side to the image side along the optical axis O, sequentially includes a first lens L1, a second lens L2, a diaphragm STO, a third lens L3, a fourth lens L4, a filter G1, and a protective glass G2.
In the third embodiment, the refractive force and surface type of each lens are consistent the refractive force and surface type of each lens in the first embodiment.
The other parameters in the third embodiment are given in the following Table 3a, and the definitions of each parameter may be obtained from the description of the first embodiment mentioned above, which will not be repeated here. The units of Y radius, thickness, focal length, and Y aperture in Table 3a are mm. The reference wavelength for the refractive index and Abbe number of each lens in Table 3a is 588 nm, and the reference wavelength for the focal length of each lens in Table 3a is 950 nm.

Table 3a

| Third embodiment | | | | | | | | |
|---|---|---|---|---|---|---|---|---|
| F=3.57mm, FNO=2.2, FOV=72.6°, TTL=8.60mm | | | | | | | | |
| Surface numeral | Surface name | Surface type | Y radius | Thickness | Material | Refractive index | Abbe number | Focal length |
| object surface | | sphere | infinity | 750 | | | | |
| 1 | first lens | asphere | -2.9315 | 0.799 | plastics | 1.53600 | 56.0 | -10.22 |
| 2 | | asphere | -6.8956 | 0.779 | | | | |
| 3 | second lens | sphere | 2.5175 | 1.347 | glass | 1.84666 | 23.8 | 4.15 |
| 4 | | sphere | 6.6957 | 0.238 | | | | |
| 5 | diaphragm | | infinity | 0.265 | | | | |
| 6 | third lens | asphere | -5.1818 | 2.092 | plastics | 1.53600 | 56.0 | 2.75 |
| 7 | | asphere | -1.3111 | 0.217 | | | | |
| 8 | fourth lens | asphere | 7.8661 | 0.699 | plastics | 1.64000 | 23.5 | -4.14 |
| 9 | | asphere | 1.9114 | 0.200 | | | | |
| 10 | filter | sphere | infinity | 0.400 | glass | 1.51680 | 64.2 | |
| 11 | | sphere | infinity | 0.968 | | | | |

(continued)

| Third embodiment | | | | | | | | |
|---|---|---|---|---|---|---|---|---|
| F=3.57mm, FNO=2.2, FOV=72.6°, TTL=8.60mm | | | | | | | | |
| Surface numeral | Surface name | Surface type | Y radius | Thickness | Material | Refractive index | Abbe number | Focal length |
| 12 | protective glass | sphere | infinity | 0.400 | glass | 1.51680 | 64.2 | |
| 13 | | sphere | infinity | 0.200 | | | | |
| 14 | imaging plane | | infinity | | | | | |

Table 3b

| Surface | 1 | 2 | 6 | 7 | 8 | 9 |
|---|---|---|---|---|---|---|
| K | 0.0000E+00 | 0.0000E+00 | 0.0000E+00 | -3.1843E-01 | 2.0000E+01 | -4.0562E-01 |
| A3 | 0.0000E+00 | 0.0000E+00 | 0.0000E+00 | 0.0000E+00 | -9.0135E-02 | 6.0278E-02 |
| A4 | 4.9101E-02 | 3.9895E-02 | 1.2917E-01 | -3.2527E-02 | -9.7771E-02 | -5.8494E-01 |
| A5 | 0.0000E+00 | 0.0000E+00 | 0.0000E+00 | 0.0000E+00 | -3.9719E-01 | 4.9743E-01 |
| A6 | -8.3786E-03 | -5.4515E-03 | -1.9190E+00 | 1.5184E-01 | 1.3677E+00 | -1.4855E-01 |
| A7 | 0.0000E+00 | 0.0000E+00 | 0.0000E+00 | 0.0000E+00 | -2.0387E+00 | 1.3569E-02 |
| A8 | 1.2540E-03 | -1.2170E-04 | 1.0668E+01 | -1.1760E-01 | 1.5355E+00 | -2.6658E-02 |
| A10 | -9.4448E-05 | 2.2578E-04 | -3.2649E+01 | 2.7381E-02 | -7.0528E-01 | 1.5168E-02 |
| A12 | 1.2045E-06 | -4.0444E-05 | 5.5397E+01 | 2.3879E-02 | 3.6991E-01 | -4.1774E-03 |
| A14 | 1.9416E-08 | -3.0461E-06 | -4.8944E+01 | -1.7234E-02 | -1.2749E-01 | 6.3993E-04 |
| A16 | 3.3075E-08 | 1.0487E-06 | 1.7589E+01 | 3.3876E-03 | 2.3665E-02 | -6.1046E-05 |
| A18 | 0.0000E+00 | 0.0000E+00 | 0.0000E+00 | 0.0000E+00 | -1.6583E-03 | 4.2731E-06 |
| A20 | 0.0000E+00 | 0.0000E+00 | 0.0000E+00 | 0.0000E+00 | -2.5732E-05 | -1.6282E-07 |

Referring to FIG. 6, as can be seen from the longitudinal spherical aberration graph (A), the astigmatism graph (B), and the distortion curve graph (C) in FIG. 6, the longitudinal spherical aberration, astigmatism, and distortion of the optical lens 100 in the second embodiment are well controlled, and thus the optical lens 100 of the embodiment has a good imaging quality. With respect to the wavelengths corresponding to each curve in (A) of FIG. 6, (B) of FIG. 6, and (C) of FIG. 6 reference may be made to what is described in the first embodiment with respect to (A) of FIG. 2, (B) of FIG. 2, and (C) of FIG. 2, and no further description will be made herein.

Fourth embodiment

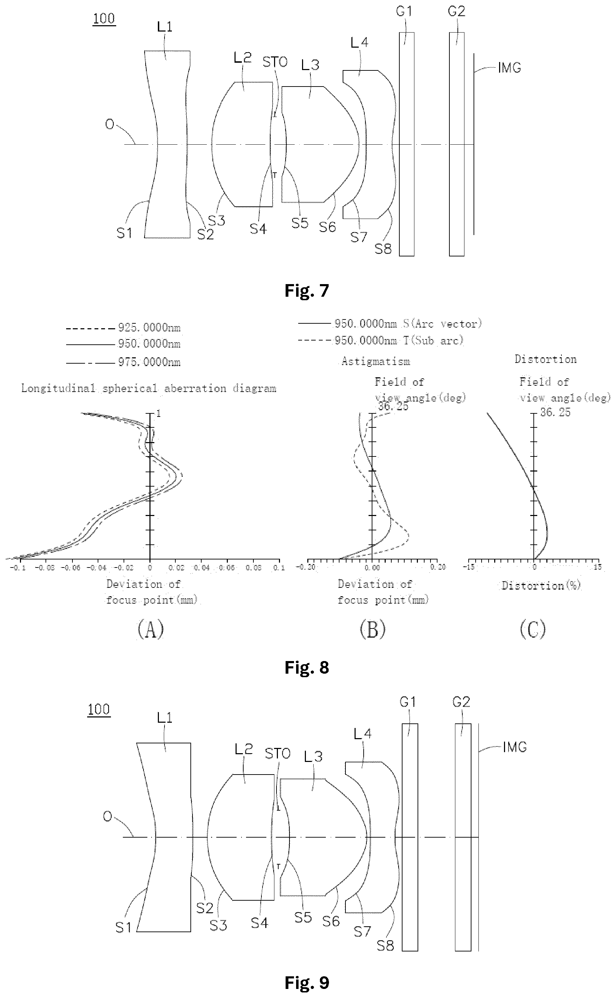

FIG. 7 illustrates an optical lens 100 of a fourth embodiment of the present application. The optical lens 100, from the object side to the image side along the optical axis O, sequentially includes a first lens L1, a second lens L2, a diaphragm STO, a third lens L3, a fourth lens L4, a filter G1, and a protective glass G2.
In the fourth embodiment, the refractive force and surface type of each lens are consistent the refractive force and surface type of each lens in the first embodiment.
The other parameters in the third embodiment are given in the following Table 4a, and the definitions of each parameter may be obtained from the description of the first embodiment mentioned above, which will not be repeated here. The units of Y radius, thickness, focal length, and Y aperture in Table 4a are mm. The reference wavelength for the refractive index and Abbe number of each lens in Table 4a is 588 nm, and the reference wavelength for the focal length of each lens in Table 4a is 950 nm.

Table 4a

| Fourth embodiment | | | | | | | | |
| --- | --- | --- | --- | --- | --- | --- | --- | --- |
| F=3.57mm, FNO=2.2, FOV=72.5°, TTL=8.56mm | | | | | | | | |
| Surface numeral | Surface name | Surface type | Y radius | Thickness | Material | Refractive index | Abbe number | Focal length |
| object surface | | sphere | infinity | 750 | | | | |
| 1 | first lens | asphere | -2.9315 | 0.799 | plastics | 1.53600 | 56.0 | -10.22 |
| 2 | | asphere | -6.8956 | 0.672 | | | | |
| 3 | second lens | sphere | 2.5391 | 1.591 | glass | 1.84666 | 23.8 | 4.13 |
| 4 | | sphere | 6.6240 | 0.136 | | | | |
| 5 | diaphrag | | infinity | 0.303 | | | | |
| 6 | third lens | asphere | -4.5339 | 1.992 | plastics | 1.53600 | 56.0 | 2.67 |
| 7 | | asphere | -1.2551 | 0.188 | | | | |
| 8 | fourth lens | asphere | 8.0875 | 0.715 | plastics | 1.64000 | 23.5 | -4.20 |
| 9 | | asphere | 1.9471 | 0.200 | | | | |
| 10 | filter | sphere | infinity | 0.400 | glass | 1.51680 | 64.2 | |
| 11 | | sphere | infinity | 0.967 | | | | |
| 12 | protective glass | sphere | infinity | 0.400 | glass | 1.51680 | 64.2 | |
| 13 | | sphere | infinity | 0.200 | | | | |
| 14 | imaging plane | | infinity | | | | | |

Table 4b

| Surface numeral | 1 | 2 | 6 | 7 | 8 | 9 |
| --- | --- | --- | --- | --- | --- | --- |
| K | 0.0000E+00 | 0.0000E+00 | 0.0000E+00 | -3.7252E-01 | 2.0000E+01 | -4.8284E-01 |
| A3 | 0.0000E+00 | 0.0000E+00 | 0.0000E+00 | 0.0000E+00 | -8.7750E-02 | 6.6716E-02 |
| A4 | 4.9101E-02 | 3.9895E-02 | 1.2657E-01 | -2.7397E-02 | -8.4096E-02 | -5.8749E-01 |
| A5 | 0.0000E+00 | 0.0000E+00 | 0.0000E+00 | 0.0000E+00 | -4.0629E-01 | 4.9800E-01 |
| A6 | -8.3786E-03 | -5.4515E-03 | -1.9259E+00 | 1.4842E-01 | 1.3639E+00 | -1.4897E-01 |
| A7 | 0.0000E+00 | 0.0000E+00 | 0.0000E+00 | 0.0000E+00 | -2.0359E+00 | 1.3869E-02 |
| A8 | 1.2540E-03 | -1.2170E-04 | 1.0647E+01 | -1.1764E-01 | 1.5376E+00 | -2.6474E-02 |
| A10 | -9.4448E-05 | 2.2578E-04 | -3.2598E+01 | 2.9101E-02 | -7.0552E-01 | 1.5149E-02 |
| A12 | 1.2045E-06 | -4.0444E-05 | 5.5350E+01 | 2.3370E-02 | 3.6948E-01 | -4.1814E-03 |
| A14 | 1.9416E-08 | -3.0461E-06 | -4.8884E+01 | -1.7632E-02 | -1.2752E-01 | 6.3907E-04 |
| A16 | 3.3075E-08 | 1.0487E-06 | 1.7549E+01 | 3.5767E-03 | 2.3732E-02 | -6.0705E-05 |
| A18 | 0.0000E+00 | 0.0000E+00 | 0.0000E+00 | 0.0000E+00 | -1.6267E-03 | 4.4319E-06 |
| A20 | 0.0000E+00 | 0.0000E+00 | 0.0000E+00 | 0.0000E+00 | -3.9397E-05 | -3.9397E-05 |

Referring to FIG. 8, as can be seen from the longitudinal spherical aberration graph (A), the astigmatism graph (B), and the distortion curve graph (C) in FIG. 8, the longitudinal spherical aberration, astigmatism, and distortion of the optical lens 100 in the second embodiment are well controlled, and thus the optical lens 100 of the embodiment has a good imaging quality. With respect to the wavelengths corresponding to each curve in (A) of FIG. 8, (B) of FIG. 8, and (C) of FIG. 8 reference may be made to what is described in the first embodiment with respect to (A) of FIG. 2, (B) of FIG. 2, and (C) of FIG. 2, and no further description will be made herein.

Fifth embodiment

FIG. 9 illustrates an optical lens 100 of a fifth embodiment of the present application. The optical lens 100, from the object side to the image side along the optical axis O, sequentially includes a first lens L1, a second lens L2, a diaphragm STO, a third lens L3, a fourth lens L4, a filter G1, and a protective glass G2.

In the fifth embodiment, the refractive force and surface type of each lens are consistent the refractive force and surface type of each lens in the first embodiment.

The other parameters in the third embodiment are given in the following Table 5a, and the definitions of each parameter may be obtained from the description of the first embodiment mentioned above, which will not be repeated here. The units of Y radius, thickness, focal length, and Y aperture in Table 5a are mm. The reference wavelength for the refractive index and Abbe number of each lens in Table 5a is 588 nm, and the reference wavelength for the focal length of each lens in Table 5a is 950 nm.

Table 5a

| Fifth embodiment | | | | | | | | |
|---|---|---|---|---|---|---|---|---|
| F=3.58mm, FNO=2.2, FOV=69.5°, TTL=8.34mm | | | | | | | | |
| Surface numeral | Surface name | Surface type | Y radius | Thickness | Material | Refractive index | Abbe number | Focal length |
| object surface | | sphere | infinity | 750 | | | | |
| 1 | first lens | asphere | -2.9036 | 0.950 | plastics | 1.53600 | 56.0 | -9.83 |
| 2 | | asphere | -7.1984 | 0.370 | | | | |
| 3 | second lens | sphere | 2.4656 | 1.662 | glass | 1.84666 | 23.8 | 3.93 |
| 4 | | sphere | 6.5568 | 0.178 | | | | |
| 5 | diaphragm | | infinity | 0.278 | | | | |
| 6 | third lens | asphere | -4.2421 | 2.008 | plastics | 1.53600 | 56.0 | 2.09 |
| 7 | | asphere | -1.0336 | 0.089 | | | | |
| 8 | fourth lens | asphere | 10.7227 | 0.631 | plastics | 1.64000 | 23.5 | -2.91 |
| 9 | | asphere | 1.5514 | 0.200 | | | | |
| 10 | filter | sphere | infinity | 0.400 | glass | 1.51680 | 64.2 | |
| 11 | | sphere | infinity | 0.970 | | | | |
| 12 | protective glass | sphere | infinity | 0.400 | glass | 1.51680 | 64.2 | |
| 13 | | sphere | infinity | 0.200 | | | | |
| 14 | imaging plane | | infinity | | | | | |

Table 5b

| Surface numeral | 1 | 2 | 6 | 7 | 8 | 9 |
|---|---|---|---|---|---|---|
| K | 0.0000E+00 | 0.0000E+00 | 0.0000E+00 | -6.7078E-01 | -1.8781E+01 | -5.9802E-01 |
| A3 | 0.0000E+00 | 0.0000E+00 | 0.0000E+00 | 0.0000E+00 | -6.7071E-02 | -8.0271E-03 |
| A4 | 4.6280E-02 | 3.5871E-02 | -8.5162E-03 | 5.6889E-02 | -1.1260E-01 | -5.6310E-01 |
| A5 | 0.0000E+00 | 0.0000E+00 | 0.0000E+00 | 0.0000E+00 | -3.4775E-01 | 5.0396E-01 |
| A6 | -9.2056E-03 | -7.4442E-03 | -6.4699E-01 | 5.2045E-02 | 1.3277E+00 | -1.5514E-01 |
| A7 | 0.0000E+00 | 0.0000E+00 | 0.0000E+00 | 0.0000E+00 | -2.0580E+00 | 1.2468E-02 |
| A8 | 1.6432E-03 | 3.1510E-04 | 3.3899E+00 | -7.4411E-02 | 1.5554E+00 | -2.5397E-02 |

(continued)

| Surface numeral | 1 | 2 | 6 | 7 | 8 | 9 |
|---|---|---|---|---|---|---|
| A10 | -1.5817E-04 | 3.1922E-04 | -9.6183E+00 | 2.8261E-02 | -6.9813E-01 | 1.5545E-02 |
| A12 | 4.2545E-06 | -1.0999E-04 | 1.4120E+01 | 1.6449E-02 | -6.9813E-01 | 1.5545E-02 |
| A14 | 2.0135E-07 | 1.1670E-05 | -1.0089E+01 | -1.6150E-02 | -1.2864E-01 | 6.0005E-04 |
| A16 | 2.1488E-08 | -7.2258E-08 | 2.7818E+00 | 3.5457E-03 | 2.3974E-02 | -5.1741E-05 |
| A18 | 0.0000E+00 | 0.0000E+00 | 0.0000E+00 | 0.0000E+00 | -1.4499E-03 | 5.7998E-06 |
| A20 | 0.0000E+00 | 0.0000E+00 | 0.0000E+00 | 0.0000E+00 | -8.2520E-05 | -5.1848E-07 |

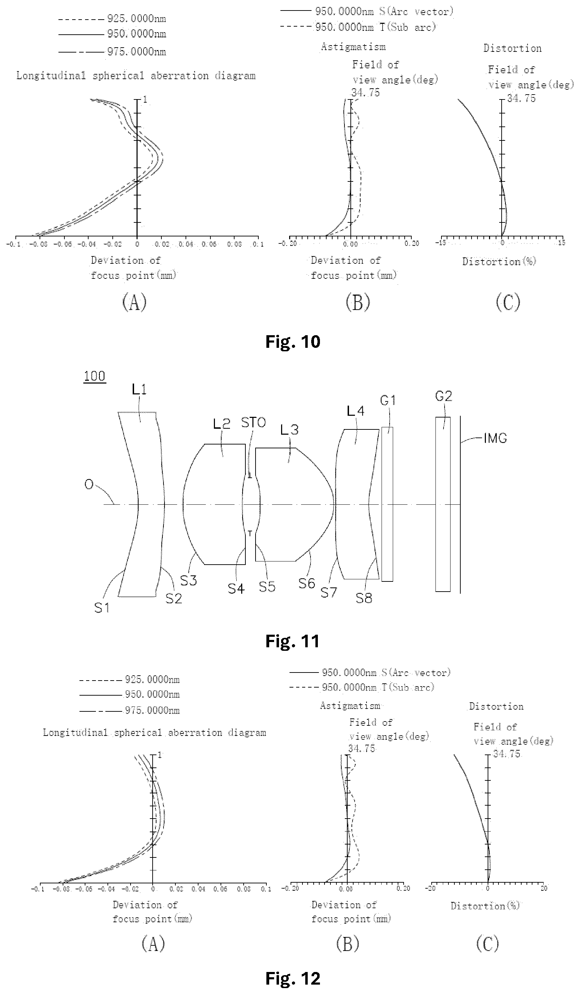

Referring to FIG. 10, as can be seen from the longitudinal spherical aberration graph (A), the astigmatism graph (B), and the distortion curve graph (C) in FIG. 10, the longitudinal spherical aberration, astigmatism, and distortion of the optical lens 100 in the second embodiment are well controlled, and thus the optical lens 100 of the embodiment has a good imaging quality. With respect to the wavelengths corresponding to each curve in (A) of FIG. 10, (B) of FIG. 10, and (C) of FIG. 10 reference may be made to what is described in the first embodiment with respect to (A) of FIG. 2, (B) of FIG. 2, and (C) of FIG. 2, and no further description will be made herein.

Sixth embodiment

FIG. 11 illustrates an optical lens 100 of a sixth embodiment of the present application. The optical lens 100, from the object side to the image side along the optical axis O, sequentially includes a first lens L1, a second lens L2, a diaphragm STO, a third lens L3, a fourth lens L4, a filter G1, and a protective glass G2.
In the sixth embodiment, the refractive force and surface type of each lens are consistent the refractive force and surface type of each lens in the first embodiment.
The other parameters in the third embodiment are given in the following Table 6a, and the definitions of each parameter may be obtained from the description of the first embodiment mentioned above, which will not be repeated here. The units of Y radius, thickness, focal length, and Y aperture in Table 6a are mm. The reference wavelength for the refractive index and Abbe number of each lens in Table 6a is 588 nm, and the reference wavelength for the focal length of each lens in Table 6a is 950 nm.

Table 6a

| Sixth embodiment | | | | | | | | |
|---|---|---|---|---|---|---|---|---|
| F=3.64mm, FNO=2.2, FOV=69.5°, TTL=8.66mm | | | | | | | | |
| Surface numeral | Surface name | Surface type | Y radius | Thickness | Material | Refractive index | Abbe number | Focal length |
| object surface | | sphere | infinity | 750 | | | | |
| 1 | first lens | asphere | -2.7174 | 0.713 | plastics | 1.53600 | 56.0 | -12.53 |
| 2 | | asphere | -4.9832 | 0.503 | | | | |
| 3 | second lens | sphere | 2.5177 | 1.600 | glass | 1.84666 | 23.8 | 5.58 |
| 4 | | sphere | 3.8183 | 0.219 | | | | |
| 5 | diaphragm | | infinity | 0.273 | | | | |
| 6 | third lens | asphere | -3.7388 | 1.988 | plastics | 1.53600 | 56.0 | 1.99 |
| 7 | | asphere | -0.9851 | 0.054 | | | | |
| 8 | fourth lens | asphere | 21.6762 | 0.884 | plastics | 1.64000 | 23.5 | -3.30 |
| 9 | | asphere | 1.8902 | 0.373 | | | | |
| 10 | filter | sphere | infinity | 0.300 | glass | 1.51680 | 64.2 | |
| 11 | | sphere | infinity | 1.153 | | | | |

(continued)

| Sixth embodiment | | | | | | | | |
|---|---|---|---|---|---|---|---|---|
| F=3.64mm, FNO=2.2, FOV=69.5°, TTL=8.66mm | | | | | | | | |
| Surface numeral | Surface name | Surface type | Y radius | Thickness | Material | Refractive index | Abbe number | Focal length |
| 12 | protective glass | sphere | infinity | 0.400 | glass | 1.51680 | 64.2 | |
| 13 | | sphere | infinity | 0.200 | | | | |
| 14 | imaging plane | | infinity | | | | | |

Table 6b

| Surface | 1 | 2 | 6 | 7 | 8 | 9 |
|---|---|---|---|---|---|---|
| K | 0.0000E+00 | 0.0000E+00 | 4.5696E+00 | -6.5821E-01 | 2.8047E-01 | -6.0544E-01 |
| A3 | 0.0000E+00 | 0.0000E+00 | 0.0000E+00 | 0.0000E+00 | -3.9967E-02 | -3.3443E-03 |
| A4 | 5.0837E-02 | 3.8763E-02 | -5.9505E-02 | 1.5567E-01 | 2.6761E-02 | -2.9708E-01 |
| A5 | 0.0000E+00 | 0.0000E+00 | 0.0000E+00 | 0.0000E+00 | -2.6736E-02 | 1.9854E-01 |
| A6 | -8.5501E-03 | -5.9309E-03 | -6.5740E-02 | -8.5593E-02 | 3.2556E-02 | 1.7738E-03 |
| A7 | 0.0000E+00 | 0.0000E+00 | 0.0000E+00 | 0.0000E+00 | 1.4133E-03 | -1.0623E-02 |
| A8 | 1.1622E-03 | -3.1073E-04 | 1.1587E-01 | 7.8878E-02 | -1.4547E-02 | -2.7509E-02 |
| A10 | -7.4854E-05 | 1.6877E-04 | -2.8800E-01 | -6.7924E-02 | 5.5356E-03 | 1.3936E-02 |
| A12 | 1.2345E-06 | -9.2573E-06 | 6.5758E-01 | 4.3459E-02 | -1.5251E-03 | -3.4965E-03 |
| A14 | -2.6357E-08 | -1.9819E-06 | -9.5752E-01 | -1.5188E-02 | 2.3220E-04 | 4.5582E-04 |
| A16 | 3.5435E-08 | 1.9371E-07 | 5.6719E-01 | 2.1870E-03 | -1.3599E-05 | -2.3855E-05 |
| A18 | 0.0000E+00 | 0.0000E+00 | 0.0000E+00 | 0.0000E+00 | -1.0723E-07 | -3.1840E-08 |

Referring to FIG. 12, as can be seen from the longitudinal spherical aberration graph (A), the astigmatism graph (B), and the distortion curve graph (C) in FIG. 12, the longitudinal spherical aberration, astigmatism, and distortion of the optical lens 100 in the second embodiment are well controlled, and thus the optical lens 100 of the embodiment has a good imaging quality. With respect to the wavelengths corresponding to each curve in (A) of FIG. 12, (B) of FIG. 12, and (C) of FIG. 12 reference may be made to what is described in the first embodiment with respect to (A) of FIG. 2, (B) of FIG. 2, and (C) of FIG. 2, and no further description will be made herein.

Seventh embodiment

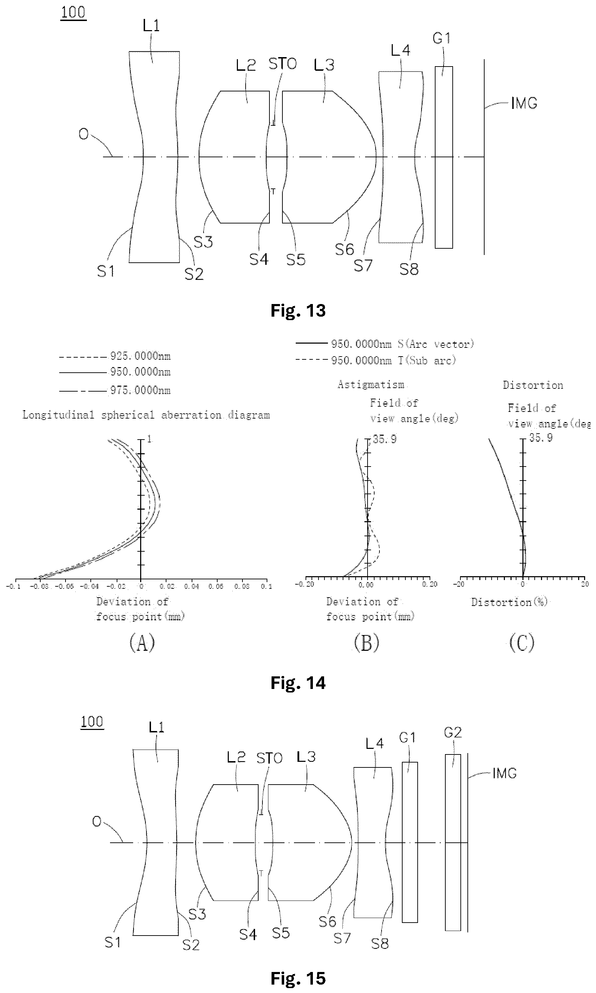

FIG. 13 illustrates an optical lens 100 of a seventh embodiment of the present application. The optical lens 100, from the object side to the image side along the optical axis O, sequentially includes a first lens L1, a second lens L2, a diaphragm STO, a third lens L3, a fourth lens L4, a filter G1, and a protective glass G2.
In the seventh embodiment, the refractive force and surface type of each lens are consistent the refractive force and surface type of each lens in the first embodiment.
The other parameters in the third embodiment are given in the following Table 7a, and the definitions of each parameter may be obtained from the description of the first embodiment mentioned above, which will not be repeated here. The units of Y radius, thickness, focal length, and Y aperture in Table 7a are mm. The reference wavelength for the refractive index and Abbe number of each lens in Table 7a is 588 nm, and the reference wavelength for the focal length of each lens in Table 7a is 950 nm.

Table 7a

| Seventh embodiment | | | | | | | | |
|---|---|---|---|---|---|---|---|---|
| F=3.64mm, FNO=2.2, FOV=71.8°, TTL=8.67mm | | | | | | | | |
| Surface numeral | Surface name | Surface type | Y radius | Thickness | Material | Refractive index | Abbe number | Focal length |
| object surface | | sphere | infinity | 750 | | | | |
| 1 | first lens | asphere | -2.9315 | 0.799 | plastics | 1.53600 | 56.0 | -10.22 |
| 2 | | asphere | -6.8956 | 0.507 | | | | |
| 3 | second lens | sphere | 2.5637 | 1.608 | glass | 1.84666 | 23.8 | 4.96 |
| 4 | | sphere | 4.6861 | 0.163 | | | | |
| 5 | diaphragm | | infinity | 0.319 | | | | |
| 6 | third lens | asphere | -5.9880 | 2.118 | plastics | 1.53600 | 56.0 | 1.99 |
| 7 | | asphere | -1.0184 | 0.157 | | | | |
| 8 | fourth lens | asphere | 25.7187 | 0.750 | plastics | 1.64000 | 23.5 | -2.77 |
| 9 | | asphere | 1.6377 | 0.500 | | | | |
| 10 | filter | sphere | infinity | 0.400 | glass | 1.51680 | 64.2 | |
| 11 | | sphere | infinity | 0.754 | | | | |
| 12 | protective glass | sphere | infinity | 0.400 | glass | 1.51680 | 64.2 | |
| 13 | | sphere | infinity | 0.200 | | | | |
| 14 | imaging plane | | infinity | | | | | |

Table 7b

| Surface | 1 | 2 | 6 | 7 | 8 | 9 |
|---|---|---|---|---|---|---|
| K | 0.0000E+00 | 0.0000E+00 | 1.1936E+01 | -6.4756E-01 | -5.6100E+00 | -6.6048E-01 |
| A3 | 0.0000E+00 | 0.0000E+00 | 0.0000E+00 | 0.0000E+00 | -5.5037E-02 | -1.7232E-02 |
| A4 | 4.9101E-02 | 3.9895E-02 | -4.9462E-02 | 1.5365E-01 | 8.3864E-03 | -3.4954E-01 |
| A5 | 0.0000E+00 | 0.0000E+00 | 0.0000E+00 | 0.0000E+00 | -2.2040E-02 | 2.3554E-01 |
| A6 | -8.3786E-03 | -5.4515E-03 | -3.8816E-02 | -9.4033E-02 | 3.2602E-02 | 8.0941E-04 |
| A7 | 0.0000E+00 | 0.0000E+00 | 0.0000E+00 | 0.0000E+00 | 1.5541E-03 | -1.4883E-02 |
| A8 | 1.2540E-03 | -1.2170E-04 | 9.6556E-02 | 9.2442E-02 | -1.5732E-02 | -3.2045E-02 |
| A10 | -9.4448E-05 | 2.2578E-04 | -2.5692E-01 | -7.6143E-02 | 6.6788E-03 | 1.6947E-02 |
| A12 | 1.2045E-06 | -4.0444E-05 | 2.9749E-01 | 4.3587E-02 | -2.0173E-03 | -4.3579E-03 |
| A14 | 1.9416E-08 | -3.0461E-06 | -1.2277E-01 | -1.3740E-02 | 2.9777E-04 | 5.8886E-04 |
| A16 | 3.3075E-08 | 1.0487E-06 | 1.9389E-03 | 1.8113E-03 | -1.1097E-05 | -3.3696E-05 |
| A18 | 0.0000E+00 | 0.0000E+00 | 0.0000E+00 | 0.0000E+00 | -5.6453E-07 | 1.9337E-07 |

Referring to FIG. 14, as can be seen from the longitudinal spherical aberration graph (A), the astigmatism graph (B), and the distortion curve graph (C) in FIG. 14, the longitudinal spherical aberration, astigmatism, and distortion of the optical lens 100 in the second embodiment are well controlled, and thus the optical lens 100 of the embodiment has a good imaging quality. With respect to the wavelengths corresponding to each curve in (A) of FIG. 14, (B) of FIG. 14, and (C) of FIG. 14 reference may be made to what is described in the first embodiment with respect to (A) of FIG. 2, (B) of FIG. 2, and (C) of FIG. 2, and no further description will be made herein.

Eighth embodiment

FIG. 15 illustrates an optical lens 100 of an eighth embodiment of the present application. The optical lens 100, from the object side to the image side along the optical axis O, sequentially includes a first lens L1, a second lens L2, a diaphragm STO, a third lens L3, a fourth lens L4, a filter G1, and a protective glass G2.

In the eighth embodiment, the refractive force and surface type of each lens are consistent the refractive force and surface type of each lens in the first embodiment.

The other parameters in the third embodiment are given in the following Table 8a, and the definitions of each parameter may be obtained from the description of the first embodiment mentioned above, which will not be repeated here. The units of Y radius, thickness, focal length, and Y aperture in Table 8a are mm. The reference wavelength for the refractive index and Abbe number of each lens in Table 8a is 588 nm, and the reference wavelength for the focal length of each lens in Table 8a is 950 nm.

Table 8a

| Eighth embodiment | | | | | | | | |
|---|---|---|---|---|---|---|---|---|
| F=3.64mm, FNO=2.2, FOV=71.9°, TTL=8.69mm | | | | | | | | |
| Surface numeral | Surface name | Surface type | Y radius | Thickness | Material | Refractive index | Abbe number | Focal length |
| object surface | | sphere | infinity | 750 | | | | |
| 1 | first lens | asphere | -2.9366 | 0.810 | plastics | 1.53600 | 56.0 | -10.03 |
| 2 | | asphere | -7.0864 | 0.509 | | | | |
| 3 | second lens | sphere | 2.5509 | 1.612 | glass | 1.84666 | 23.8 | 4.90 |
| 4 | | sphere | 4.7009 | 0.161 | | | | |
| 5 | diaphragm | | infinity | 0.314 | | | | |
| 6 | third lens | asphere | -6.0737 | 2.134 | plastics | 1.53600 | 56.0 | 1.99 |
| 7 | | asphere | -1.0205 | 0.162 | | | | |
| 8 | fourth lens | asphere | 26.5125 | 0.743 | plastics | 1.64000 | 23.5 | -2.76 |
| 9 | | asphere | 1.6360 | 0.500 | | | | |
| 10 | filter | sphere | infinity | 0.400 | glass | 1.51680 | 64.2 | |
| 11 | | sphere | infinity | 0.748 | | | | |
| 12 | protective glass | sphere | infinity | 0.400 | glass | 1.51680 | 64.2 | |
| 13 | | sphere | infinity | 0.200 | | | | |
| 14 | imaging plane | | infinity | | | | | |

Table 8b

| Surface | 1 | 2 | 6 | 7 | 8 | 9 |
|---|---|---|---|---|---|---|
| K | 0.0000E+00 | 0.0000E+00 | 1.3374E+01 | -6.4612E-01 | 4.9822E+00 | -6.5067E-01 |
| A3 | 0.0000E+00 | 0.0000E+00 | 0.0000E+00 | 0.0000E+00 | -5.4962E-02 | -1.6825E-02 |
| A4 | 4.8682E-02 | 3.9653E-02 | -5.0560E-02 | 1.5409E-01 | 8.7571E-03 | -3.5015E-01 |
| A5 | 0.0000E+00 | 0.0000E+00 | 0.0000E+00 | 0.0000E+00 | -2.2283E-02 | 2.3588E-01 |
| A6 | -8.3686E-03 | -5.6445E-03 | -3.2023E-02 | -9.4210E-02 | 3.2354E-02 | 7.3474E-04 |
| A7 | 0.0000E+00 | 0.0000E+00 | 0.0000E+00 | 0.0000E+00 | 1.5104E-03 | -1.4976E-02 |
| A8 | 1.2580E-03 | -9.1678E-05 | 9.3835E-02 | 9.2452E-02 | -1.5722E-02 | -3.2073E-02 |
| A10 | -9.4377E-05 | 2.3802E-04 | -2.7373E-01 | -7.6219E-02 | 6.6824E-03 | 1.6950E-02 |

(continued)

| Surface | 1 | 2 | 6 | 7 | 8 | 9 |
|---|---|---|---|---|---|---|
| A12 | 1.1677E-06 | -4.1857E-05 | 2.9391E-01 | 4.3575E-02 | -2.0194E-03 | -4.3564E-03 |
| A14 | 6.9457E-09 | -3.8533E-06 | -7.7183E-02 | -1.3711E-02 | 2.9876E-04 | 5.8905E-04 |
| A16 | 3.4254E-08 | 1.1807E-06 | -2.7083E-02 | 1.8055E-03 | -1.0439E-05 | -3.3770E-05 |
| A18 | 0.0000E+00 | 0.0000E+00 | 0.0000E+00 | 0.0000E+00 | -7.2127E-07 | 1.9529E-07 |

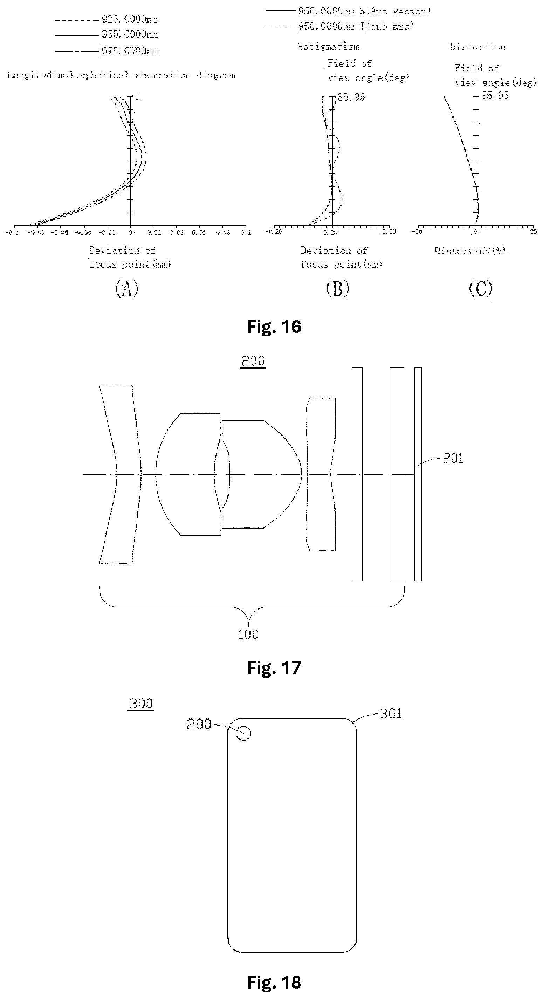

Referring to FIG. 16, as can be seen from the longitudinal spherical aberration graph (A), the astigmatism graph (B), and the distortion curve graph (C) in FIG. 16, the longitudinal spherical aberration, astigmatism, and distortion of the optical lens 100 in the second embodiment are well controlled, and thus the optical lens 100 of the embodiment has a good imaging quality. With respect to the wavelengths corresponding to each curve in (A) of FIG. 16, (B) of FIG. 16, and (C) of FIG. 16 reference may be made to what is described in the first embodiment with respect to (A) of FIG. 2, (B) of FIG. 2, and (C) of FIG. 2, and no further description will be made herein.

Table 9 shows the value of relevant parameters of the optical lens 100 in the first embodiment to the eighth embodiment.

Table 9

| | First embodiment | Second embodiment | Third embodiment | Fourth embodiment | Fifth embodiment | Sixth embodiment | Seventh embodiment | Eighth embodiment |
|---|---|---|---|---|---|---|---|---|
| FOV | 67.5° | 69.5° | 72.6° | 72.5° | 69.5° | 69.5° | 71.8° | 71.9° |
| ImgH/F | 1.233 | 1.329 | 1.347 | 1.347 | 1.288 | 1.266 | 1.321 | 1.321 |
| TTL/ImgH | 1.761 | 1.837 | 1.788 | 1.780 | 1.809 | 1.879 | 1.802 | 1.807 |
| FOV/FNO | 30.682° | 31.591° | 33.000° | 32.955° | 31.591° | 31.591° | 32.636° | 32.682° |
| TTL/F | 2.171 | 2.441 | 2.409 | 2.398 | 2.330 | 2.379 | 2.382 | 2.387 |
| SD11/SD21 | 1.471 | 1.498 | 1.498 | 1.498 | 1.498 | 1.543 | 1.604 | 1.605 |
| SD22/SD31 | 1.053 | 1.079 | 1.091 | 1.091 | 0.917 | 1.082 | 0.959 | 0.961 |
| SD41/SD32 | 1.433 | 1.084 | 1.084 | 1.084 | 1.084 | 1.325 | 1.173 | 1.170 |
| (F1+F2)/F | -3.040 | -1.714 | -1.701 | -1.708 | -1.647 | -1.908 | -1.446 | -1.409 |
| F1/F | -4.607 | -2.946 | -2.864 | -2.864 | -2.746 | -3.441 | -2.809 | -2.756 |
| F1/F4 | 5.930 | 2.416 | 2.472 | 2.435 | 3.374 | 3.799 | 3.694 | 3.637 |
| $\sum CT/\sum AT$ | 4.998 | 3.155 | 3.293 | 3.923 | 5.739 | 4.944 | 4.603 | 4.624 |
| CT3/CT4 | 3.190 | 3.120 | 2.994 | 2.787 | 3.180 | 2.250 | 2.823 | 2.871 |
| TTL/CT3 | 4.088 | 4.353 | 4.111 | 4.296 | 4.154 | 4.355 | 4.094 | 4.073 |
| F2/CT2 | 3.594 | 3.009 | 3.082 | 2.593 | 2.367 | 3.489 | 3.086 | 3.040 |
| R11/R42 | -1.749 | -1.394 | -1.534 | -1.506 | -1.872 | -1.438 | -1.790 | -1.795 |
| (R21+R22)/(R2 1-R22) | -6.324 | -3.512 | -2.205 | -2.243 | -2.205 | -4.872 | -3.416 | -3.373 |
| R41/R42 | 7.708 | 4.997 | 4.115 | 4.154 | 6.911 | 11.468 | 15.704 | 16.205 |
| CT1/CT4 | 1.053 | 1.281 | 1.143 | 1.117 | 1.505 | 0.807 | 1.064 | 1.090 |
| CT3/CT2 | 1.219 | 1.369 | 1.553 | 1.252 | 1.208 | 1.243 | 1.317 | 1.323 |
| CT23/CT12 | 1.011 | 0.380 | 0.646 | 0.653 | 1.234 | 0.978 | 0.951 | 0.934 |
| FOV*F/ImgH | 54.761° | 52.313° | 53.884° | 53.810° | 53.972° | 54.876° | 54.335° | 54.411° |
| ImgH/(F*tan(FOV/2)) | 1.845 | 1.915 | 1.834 | 1.838 | 1.856 | 1.826 | 1.825 | 1.822 |

(continued)

| | First embodiment | Second embodiment | Third embodiment | Fourth embodiment | Fifth embodiment | Sixth embodiment | Seventh embodiment | Eighth embodiment |
|---|---|---|---|---|---|---|---|---|
| FNO | 2.2 | 2.2 | 2.2 | 2.2 | 2.2 | 2.2 | 2.2 | 2.2 |
| F/F2 | 1.567 | 1.232 | 1.163 | 1.156 | 1.099 | 1.533 | 1.363 | 1.347 |
| F/F3 | 1.951 | 1.279 | 1.297 | 1.338 | 1.712 | 1.826 | 1.828 | 1.827 |
| F/F4 | -1.287 | -0.820 | -0.863 | -0.850 | -1.229 | -1.104 | -1.315 | -1.320 |
| F2/F3 | 3.057 | 1.576 | 1.508 | 1.546 | 1.882 | 2.801 | 2.492 | 2.460 |
| R21/R32 | -2.545 | -1.664 | -1.920 | -2.023 | -2.385 | -2.556 | -2.517 | -2.500 |
| R22/R31 | -0.773 | -0.562 | -1.292 | -1.461 | -1.546 | -1.021 | -0.783 | -0.774 |
| R11/F | -0.738 | -0.845 | -0.821 | -0.821 | -0.811 | -0.747 | -0.805 | -0.807 |
| SD11/ImgH | 1.085 | 1.085 | 1.040 | 1.040 | 1.085 | 1.084 | 1.036 | 1.036 |
| TTL/ΣCT | 1.659 | 1.769 | 1.742 | 1.679 | 1.588 | 1.670 | 1.644 | 1.640 |
| R12/R11 | 1.5448 | 2.3522 | 2.3522 | 2.3522 | 2.4791 | 1.8338 | 2.3522 | 2.4131 |
| R22/R21 | 1.3757 | 1.7961 | 2.6597 | 2.6088 | 2.6593 | 1.5166 | 1.8279 | 1.8428 |
| R31/R32 | 4.5297 | 5.3200 | 3.9524 | 3.6123 | 4.1040 | 3.7953 | 5.8796 | 5.9517 |

Referring to FIG. 17, the present application further discloses a camera module 200, the camera module 200 includes an image sensor 201 and an optical lens 100 as described in any one of the first embodiment to the eighth embodiment, and the image sensor 201 is disposed on the image side of the optical lens 100. The optical lens 100 may be used to receive light signals from the subject and project the light signals onto the image sensor 201, and the image sensor 201 can convert the light signals corresponding to the subject into image signals, which will not be repeated here. The camera module 200 with the optical lens 100 mentioned above has all the technical effects of the optical lens 100, and the optical lens 100 can achieve excellent imaging quality while meeting the requirements of miniaturized design.

Referring to FIG. 18, the present application further discloses a terminal device 300, the terminal device 300 includes a housing 301 and a camera module 200 as described above, and the camera module 200 is disposed in the housing 301. The terminal device 300 can include but is not limited to mobile phones, tablets, laptops, smart watches, monitors, dash cams, rearview cameras, etc. The terminal device 300 with the camera module 200 mentioned above has all the technical effects of the optical lens 100, in other words, and the terminal device can meet requirement of miniaturization, and can have good imaging performance and variable aperture.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims.

## Claims

1. An optical lens comprising four lenses having refractive power, from an object side to an image side along an optical axis, the four lenses sequentially comprising: a first lens, a second lens, a third lens, and a fourth lens;

   the first lens having negative refractive power, an object side surface of the first lens being concave near the optical axis, and an image side surface of the first lens being convex near the optical axis;
   the second lens having positive refractive power, an object side surface of the second lens being convex near the optical axis, and an image side surface of the second lens being concave near the optical axis;
   the third lens having positive refractive power, an object side surface of the third lens being concave near the optical axis, and an image side surface of the third lens being convex near the optical axis; and
   the fourth lens having negative refractive power, an object side surface of the fourth lens being convex near the optical axis, and an image side surface of the fourth lens being concave near the optical axis;
   wherein the optical lens satisfies following relationships: $65° < FOV < 75°$, $1.2 < ImgH/F < 1.4$; and
   wherein FOV is a maximum field of view of the optical lens, ImgH is a diameter of a largest effective imaging circle on an imaging plane of the optical lens, and F is an effective focal length of the optical lens.

2. The optical lens according to claim 1, wherein the optical lens further satisfies following relationships:

$$1.7<TTL/ImgH<1.9;$$

and/or

$$30°<FOV/FNO<34°;$$

and/or

$$2.1<TTL/F<2.5;$$

wherein TTL is a distance from the object side surface of the first lens to the imaging plane of the optical lens along the optical axis, FNO is an aperture number of the optical lens.

3. The optical lens according to claim 1, wherein the optical lens further satisfies following relationship:

$$1.4<SD11/SD21<1.7;$$

and/or

$$0.9<SD22/SD31<1.1;$$

and/or

$$1<SD41/SD32<1.5;$$

wherein SD11 is a maximum effective aperture of the object side surface of the first lens, SD21 is a maximum effective aperture of the object side surface of the second lens, SD31 is a maximum effective aperture of the object side surface of the third lens, SD41 is a maximum effective aperture of the object side surface of the fourth lens, and SD32 is a maximum effective aperture of the image side surface of the third lens.

4. The optical lens according to claim 1, wherein the optical lens further comprises a prism, the optical lens further satisfies following relationship:

$$-4<(F1+F2)/F<-1;$$

and/or

$$-5<F1/F<-2;$$

and/or

$$2<F1/F4<6.1;$$

wherein F1 is an effective focal length of the first lens, F2 is an effective focal length of the second lens, F4 is an effective focal length of the fourth lens.

5. The optical lens according to claim 1, wherein the optical lens further satisfies following relationship:

$$3<\textstyle\sum CT/\sum AT<6;$$

and/or

$$2<CT3/CT4<3.4;$$

and/or

$$4<TTL/CT3<4.4;$$

wherein $\Sigma CT$ is a sum of thicknesses of all lenses in the first lens to the fourth lens at the optical axis O, $\Sigma AT$ is a sum of gaps between two adjacent lenses in the first lens to the fourth lens, CT3 is a thickness of the third lens at the optical axis, CT4 is a thickness of the fourth lens at the optical axis, and TTL is a distance from the object side surface of the first lens to the imaging plane of the optical lens along the optical axis.

6. The optical lens according to claim 1, wherein the optical lens further satisfies following relationship:

$$2<F2/CT2<3.7;$$

and/or

$$-2<R11/R42<-1;$$

and/or

$$-7<(R21+R22)/(R21-R22)<-2;$$

and/or

$$4<R41/R42<20;$$

wherein F2 is an effective focal length of the second lens, CT2 is a thickness of the second lens at the optical axis, R11 is a curvature radius of the object side surface of the first lens at the optical axis, R42 is a curvature radius of the image side surface of the fourth lens at the optical axis, R21 is a curvature radius of the object side surface of the second lens at the optical axis, R22 is a curvature radius of the image side surface of the second lens at the optical axis, R41 is a curvature radius of the object side surface of the second lens at the optical axis.

7. The optical lens according to claim 1, wherein the optical lens further satisfies following relationship:

$$0.8<CT1/CT4<1.6;$$

and/or

$$1.2<CT3/CT2<1.6;$$

and/or

$$0.3<CT23/CT12<1.3;$$

wherein CT1 is a thickness of the first lens at the optical axis, CT4 is a thickness of the fourth lens at the optical axis, CT3 is a thickness of the third lens at the optical axis, CT2 is a thickness of the second lens at the optical axis, CT23 is a distance between the image side surface of the second lens and the object side surface of the third lens at the optical axis, CT12 is a distance between the image side surface of the first lens and the object side surface of the second lens at the optical axis .

8. The optical lens according to claim 1, wherein the optical lens further satisfies following relationship:

$$52°<FOV*F/ImgH<55°; \text{ and/or } 1.7<ImgH/(F*tan(FOV/2))<2.$$

9. A camera module comprising an image sensor and an optical lens according to any one of claims 1-8, and the image sensor located on the image side of the optical lens.

10. A terminal device comprising a housing and a camera module according to claim 9, and the camera module disposed in the housing.

**Fig. 1**

**Fig. 2**

**Fig. 3**

------- 925.0000nm
———— 950.0000nm
— - — 975.0000nm

———— 950.0000nm S(Arc vector)
----- 950.0000nm T(Sub arc)

Longitudinal spherical aberration diagram

Astigmatism
Field of
view angle(deg)
34.75

Distortion
Field of
view angle(deg)
34.75

Deviation of
focus point(mm)

(A)

Deviation of
focus point(mm)

(B)

Distortion(%)

(C)

**Fig. 4**

**Fig. 5**

------- 925.0000nm
———— 950.0000nm
— - — 975.0000nm

———— 950.0000nm S(Arc vector)
----- 950.0000nm T(Sub arc)

Longitudinal spherical aberration diagram

Astigmatism
Field of
view angle(deg)
36.3

Distortion
Field of
view angle(deg)
36.3

Deviation of
focus point(mm)

(A)

Deviation of
focus point(mm)

(B)

Distortion(%)

(C)

**Fig. 6**

**Fig. 7**

------- 925.0000nm
――― 950.0000nm
――-― 975.0000nm

――― 950.0000nm S(Arc vector)
----- 950.0000nm T(Sub arc)

Longitudinal spherical aberration diagram

Astigmatism

Distortion

Field of view angle(deg)
36.25

Field of view angle(deg)
36.25

Deviation of focus point(mm)

Deviation of focus point(mm)

Distortion(%)

(A)

(B)

(C)

**Fig. 8**

**Fig. 9**

------- 925.0000nm
——— 950.0000nm
—-—- 975.0000nm

Longitudinal spherical aberration diagram

——— 950.0000nm S(Arc vector)
----- 950.0000nm T(Sub arc)

Astigmatism

Distortion

Field of
view angle(deg)
34.75

Field of
view angle(deg)
34.75

Deviation of
focus point(mm)

Deviation of
focus point(mm)

Distortion(%)

(A)

(B)

(C)

**Fig. 10**

100

**Fig. 11**

------- 925.0000nm
——— 950.0000nm
—-—- 975.0000nm

Longitudinal spherical aberration diagram

——— 950.0000nm S(Arc vector)
----- 950.0000nm T(Sub arc)

Astigmatism

Distortion

Field of
view angle(deg)
34.75

Field of
view angle(deg)
34.75

Deviation of
focus point(mm)

Deviation of
focus point(mm)

Distortion(%)

(A)

(B)

(C)

**Fig. 12**

100

L1

L2 STO L3

L4 G1

O

IMG

S3

S1 S2 S4 S5 S6 S7 S8

**Fig. 13**

------- 925.0000nm
——— 950.0000nm
— · — 975.0000nm

——— 950.0000nm S(Arc vector)
- - - - - 950.0000nm T(Sub arc)

Longitudinal spherical aberration diagram

Astigmatism
Field of
view angle(deg)

Distortion
Field of
view angle(deg

1

35.9

35.9

-0.1 -0.08 -0.06 -0.04 -0.02 0 0.02 0.04 0.06 0.08 0.1

-0.20 0.00 0.20

-20 0 20

Deviation of
focus point(mm)

Deviation of
focus point(mm)

Distortion(%)

(A)

(B)

(C)

**Fig. 14**

100

L1

L2 STO L3

L4 G1 G2

O

IMG

S3

S1 S2 S4 S5 S6 S7 S8

**Fig. 15**

------- 925.0000nm
——— 950.0000nm
—·—· 975.0000nm

——— 950.0000nm S(Arc vector)
----- 950.0000nm T(Sub arc)

Longitudinal spherical aberration diagram

Astigmatism
Field of
view angle(deg)

Distortion
Field of
view angle(deg)

35.95

35.95

-0.1 -0.08 -0.06 -0.04 -0.02 0 0.02 0.04 0.06 0.08 0.1

-0.20    0.00    0.20

-20    0    20

Deviation of
focus point(mm)

Deviation of
focus point(mm)

Distortion(%)

(A)

(B)

(C)

**Fig. 16**

200

201

100

**Fig. 17**

300

200

301

**Fig. 18**